(19) Europäisches Patentamt

European Patent Office

Office européen des brevets

(11) **EP 1 020 973 A2**

(12) **EUROPEAN PATENT APPLICATION**

(43) Date of publication:
**19.07.2000 Bulletin 2000/29**

(51) Int. Cl.$^7$: **H02J 7/02**

(21) Application number: **00100226.0**

(22) Date of filing: **17.01.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **18.01.1999 JP 882499**
**13.10.1999 JP 29099099**

(71) Applicant: **Hitachi, Ltd.**
**Chiyoda-ku, Tokyo 101-8010 (JP)**

(72) Inventors:
• **Kubo, Kenji**
**Hitachi-shi, Ibaraki 317-0077 (JP)**
• **Nomura, Takahiro**
**Niigata-shi, Niigata 950-2044 (JP)**
• **Tokunaga, Norikazu**
**Hitachi-shi, Ibaraki 316-0023 (JP)**
• **Miyazaki, Hideki**
**Hitachi-shi, Ibaraki 319-1413 (JP)**
• **Emori, Akihiko**
**Hitachi-shi, Ibaraki 316-0025 (JP)**

(74) Representative:
**Beetz & Partner**
**Patentanwälte**
**Steinsdorfstrasse 10**
**80538 München (DE)**

(54) **A charge and discharge system for electric power storage equipment**

(57) A charge and discharge apparatus of electric power storage means (4, 5, 6) comprising an AC power source (1), a transforming apparatus (2), which comprises a primary winding connected to the AC power source (1), and plural secondary windings (201, 202, 203), and plural electric power converters comprising plural AC sides, respective of which is connected to one of the plural secondary windings (201, 202, 203), and plural DC sides, respective of which is connected to one of the plural electric power storage means (4, 5, 6).

*FIG.1*

**Description**

BACKGROUND OF THE INVENTION

The present invention relates to a charge and discharge system for electric power storage equipment, and a method of manufacturing the electric power storage equipment using the same.

In accordance with lithium-ion secondary battery or nickel-metal hydride secondary battery, and the like, a charging treatment, or a charging-discharging treatment of an unit battery is performed in order to inspect the secondary battery after assembling, or to activate chemical reactions, and so on. Conventionally, when a defected battery was found in the charging-discharging test of the batteries after assembling, it was necessary to select the defected battery one by one. Therefore, the charging-discharging operation is performed on respective battery by providing independent charge and discharge power source to the respective battery. In particular, lithium ion secondary battery requires to perform not only constant current charging, but also constant voltage charging during a charging operation. Therefore, an individual electric power source system for charging, which makes it possible to set the charging current and the charging voltage individually for respective of the batteries, is used. On the other hand, when the respective battery is used for electric vehicles or batteries for electric power storage, a set of batteries is formed by connecting plurality of the unit batteries in series. The set of unit batteries connected in series is charged by applying a voltage at both end terminals, and discharged from the both end terminals for taking out electric power. In a case when the set of batteries is charged or discharged in the condition that the batteries are connected in series, a same charging current is flown to all the respective of the batteries. Therefore, if the capacity of the respective of the batteries differs somewhat each other, variation in the voltage of the individual battery is generated. Particularly, lithium-ion secondary battery requires to maintain the battery voltage at a value lower than a designated voltage during the charging operation. Therefore, a charge and discharge system, wherein a set of batteries connected in multi-series is charged or discharge, is well-known as disclosed in JP-A-8-88944 (1996). In order to suppress the variation in the individual batteries connected in series, an electric power source is provided to the respective of the batteries for correction.

However, in the case when the individual unit battery is charged or discharged by respective charge and discharge electric power source, the charge and discharge electric power supplies, the number of which is proportional to the number of the unit batteries being charged or discharged simultaneously, are required. Particularly, the charge and discharge apparatus for activation treatment or inspection of the secondary batteries after assembling requires several hours for a series of charging-discharging treatment. Therefore, in order to improve production efficiency, it is necessary to charge or discharge a large number of unit batteries simultaneously using a large number of charge and discharge electric power supplies. Therefore, a problem is generated that a large number of the electric power supplies are required, in spite of only for charging or discharging a large number of unit batteries with a similar current and voltage pattern.

In accordance with the charge and discharge system, wherein plural unit batteries are connected in series for composing a set of batteries, and charging or discharging the set of plural batteries simultaneously using an electric power source for the simultaneous charging or discharging, circuits for bypassing defected batteries which are detected during the charging or discharging operations are required for every respective of the batteries. In order to charge or discharge the batteries so that the voltage of the respective of the batteries becomes uniform by compensating variation in voltage caused by variation in capacity of the respective battery, respective charge and discharge electric power source is required for respective battery. In particular, for lithium-ion secondary battery, it is necessary to perform charging or discharging with measuring the voltage of the respective battery precisely. In a condition that each of the unit batteries is connected in series, the voltage of the respective battery must be detected by a differential voltage, and a problem that the circuit for detecting the voltage becomes complex is generated.

In a case when plurality of batteries connected in parallel are charged or discharged, the charging current or discharging current does not become uniform, and each of the batteries can not be charged fully. Furthermore, additional circuits for detecting failed battery and separating the failed battery become necessary.

SUMMARY OF THE INVENTION

The present invention has been achieved in consideration of the above problems.

The charge and discharge apparatus for electric power storage means relating to the present invention comprises an AC power source; a transformer comprising a primary winding connected to the AC power source, and plural secondary windings; and plural electric power converters comprising plural AC sides connected to plural secondary windings, and plural DC sides for connecting to plural electric power storage means.

In accordance with the present invention, the plural electric power storage means can be charged simultaneously from the AC power source, or plural electric power storage means can be discharged simultaneously to the AC power source, because the electric power storage means is connected to plural secondary windings of the transformer, which is connected to the AC power source.

The charge and discharge apparatus of the electric power storage means according to the present invention comprises an apparatus having a charging function, an apparatus having a discharging function, and an apparatus having a charging and discharging function. As the AC power source, various apparatus which can output AC power are usable. However, the apparatus which comprises the electric power converter connected to the transformer is desirable. In this case, charging or discharging plural electric power storage means can be controlled simultaneously as an unit by controlling the electric power converter so that the current flown through the primary winding becomes a current reference. As the electric power storage means, there are secondary batteries, battery set wherein plural unit secondary batteries are connected in series, electrical double layer capacitors, condensers, fuel cells, and so on.

In accordance with the charge and discharge apparatus of the electric power storage means according to the present invention, a motor driving system can be composed by providing an AC power source to the electric power converter, and furthermore, providing a motor, and an inverter for driving the motor, whereto electric power is supplied from the electric power converter. In accordance with the charge and discharge apparatus of the electric power storage means according to the present invention, an electric power storage means can be composed by connecting the AC power source to an electric power system.

A method of manufacturing the electric power storage means according to the present invention comprises the steps of: a first step for assembling main bodies of plural electric power storage means; a second step for connecting one of the assembled plural electric power storage means to respective of the DC side of the plural electric power converter in the charge and discharge apparatus of the electric power storage means according to the present invention; and a third step for performing initial charging, or initial discharging, or aging treatment with the plural electric power storage means by the charge and discharge apparatus of the electric power storage means according to the present invention.

In accordance with the present invention, it becomes possible to perform initial charging, or initial discharging, or aging treatment with the plural electric power storage means simultaneously as an unit by the AC power source in the manufacturing steps of the electric power storage means. Desirably, the AC power source comprises an electric power converter connecting to the primary winding of the transformer. In this case, the initial charging, or the initial discharging, or the aging treatment of the plural electric power storage means can be controlled simultaneously as an unit by controlling the electric power converter so as to make the current flown through the primary winding as the current reference.

BRIEF DESCRIPTION OF THE DRAWINGS

FIG. 1 is a wiring diagram indicating the composition of the charge power source by the first embodiment,

FIG. 2 is an illustration indicating operation waveform of the charge power source by the first embodiment,

FIG. 3 is an illustration indicating operation waveform of the charge power source by the first embodiment,

FIG. 4 is an illustration indicating operation waveform of the charge power source by the first embodiment,

FIG. 5 is an illustration indicating operation waveform of the charge power source by the first embodiment,

FIG. 6 is a wiring diagram indicating the composition of the discharge power source by the second embodiment,

FIG. 7 is an illustration indicating operation waveform of the discharge power source by the second embodiment,

FIG. 8 is a wiring diagram indicating the composition of the charge and discharge power source by the third embodiment,

FIG. 9 is a wiring diagram indicating the composition of the charge and discharge power source by the fourth embodiment,

FIG. 10 is an illustration indicating operation waveform of the charge and discharge power source by the fourth embodiment,

FIG. 11 is a wiring diagram indicating the composition of the charge and discharge power source by the fifth embodiment,

FIG. 12 is a wiring diagram indicating the composition of the charge and discharge power source by the sixth embodiment,

FIG. 13 is an illustration indicating operation waveform of the charge and discharge power source by the sixth embodiment,

FIG. 14 is an illustration indicating operation waveform of the charge and discharge power source by the sixth embodiment,

FIG. 15 is a wiring diagram indicating the composition of the charge and discharge apparatus for a set of batteries, which is an embodiment of the present invention,

FIG. 16 is a wiring diagram indicating the composition of the charge and discharge apparatus for a set of batteries, which is an embodiment of the present invention,

FIG. 17 is a wiring diagram indicating the composition of the charge and discharge apparatus for a set of batteries, which is an embodiment of the present invention,

FIG. 18 is a wiring diagram indicating an example of application of the present invention to an electric vehicle, which is an embodiment of the present invention,

FIG. 19 is a wiring diagram indicating an example of application of the present invention to an electric vehicle, which is an embodiment of the present invention,

FIG. 20 is a wiring diagram indicating an example of application of the present invention to an electric power storage system, which is an embodiment of the present invention,

FIG. 21 is a wiring diagram indicating an example of application of the present invention to an electric power storage system, which is an embodiment of the present invention,

FIG. 22 is a wiring diagram indicating an embodiment of the present invention, wherein plural transformers are used as a transforming apparatus,

FIG. 23 is an illustration indicating operation waveform at charging the secondary battery in the embodiment indicated in FIG. 22,

FIG. 24 is an illustration indicating operation waveform at discharging the secondary battery in the embodiment indicated in FIG. 22,

FIG. 25 is a wiring diagram indicating an embodiment of the present invention, wherein an electric power converter comprising plural chopper circuit is provided,

FIG. 26 is an illustration indicating operation waveform of the embodiment indicated in FIG. 25, and

FIG. 27 is a wiring diagram indicating an embodiment of the present invention, wherein plural DC sides of the electric power converters are connected in series.

DESCRIPTION OF THE PREFERRED EMBODIMENTS

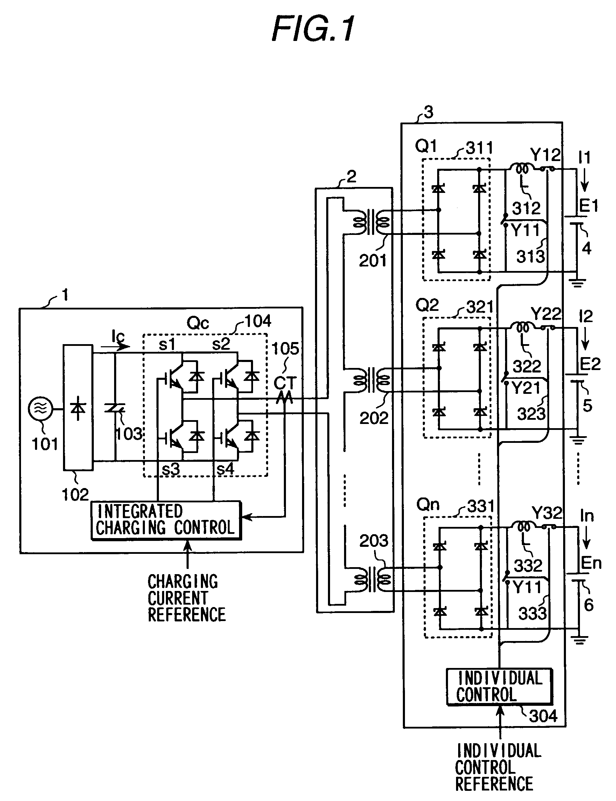

Hereinafter, a case when n pieces (n>2) of secondary batteries are charged simultaneously as an unit is explained referring to FIG. 1 as the first embodiment of the present invention. In accordance with FIG. 1, the output of the AC power source 1 is connected to the primary side of the transformer 2, and the transformer 2 has n pieces of secondary windings 201, 202, and 203 for outputs. Here, plural primary windings of the transformer 2 are connected in series, and the output of the AC power source 1 is applied to the both ends of the connected primary windings. Respective of the secondary side output of the transformer 2 is supplied to plural unit cells via the AC/DC converting means 3 comprising n pieces of respective AC/DC converter. The AC power source 1 can be obtained by rectifying AC voltage from the three phases commercial electric power source 101 by the rectifying diode converter 102, and converting DC voltage obtained by smoothing the above output by the ballast capacitor 103 to AC voltage having a desired frequency by full bridge converter 104. Here, when the three phases commercial voltage is AC 200 V, the DC voltage becomes approximately 280 V. The full bridge converter is composed of IGBT (Insulated Gate Bipolar Transistor), i.e. a semiconductor switching element, and the frequency of the AC output voltage becomes 20 kHz.

The secondary circuit of the transformer is composed of the rectifying diode bridges 311, 321, 331, which are respectively provided to respective of the batteries, and reactors 312, 322, 323, which are respectively connected to DC output of respective of the diode bridges. The secondary circuit of the transformer converts AC voltage at secondary side of the transformer to DC voltage, and supplies charging current to respective of the secondary batteries 4, 5, and 6. Here, when the ratio of the winding number of the windings respectively connected to the primary side and the secondary side of the transformer is set 1 : a, the ratio of the current at the primary side winding connected in series versus output current of respective secondary side windings of the transformer becomes a : 1. The primary side current and plural secondary side current of the transformer are flown maintaining the above relation, irrelevant to fluctuations of respective battery voltage, internal resistance, and others. Accordingly, the current at the secondary side of the transformer can be controlled simultaneously as a unit by controlling the full bridge converter 104 so that the current at the primary side of the transformer coincides with the desirably current reference. The switches Y11, Y21, Y31, for shunting the outputs of the rectifying diode bridges 311, 321, 331, and the switches Y12, Y22, Y32, for separating the connection with respective of the batteries 4, 5, 6, are provided to respective of the secondary circuits. Each of these switches is controlled for on/off according to the respective controlling signals 313, 323, 333 from the respective controlling apparatus 304.

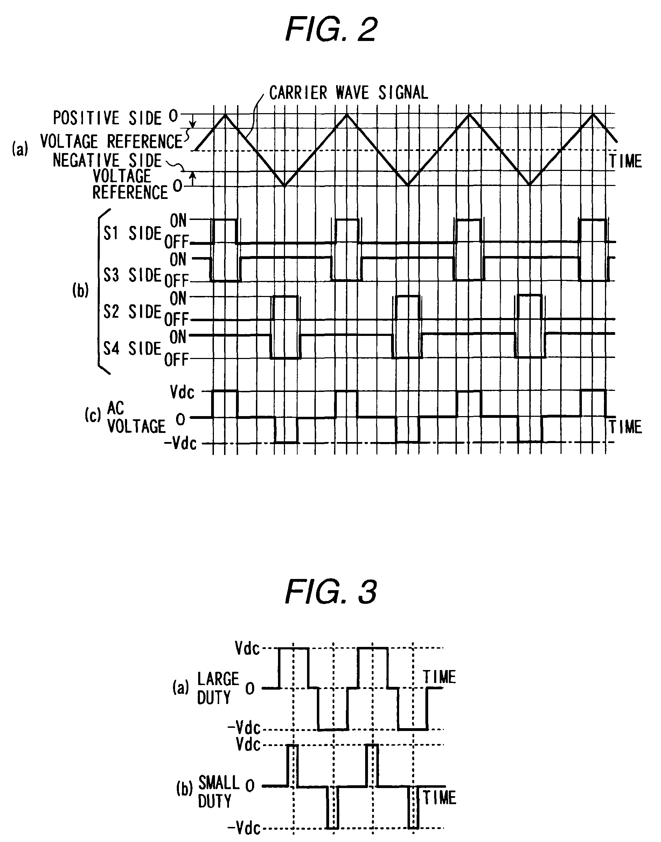

Next, operation waveforms are indicated in FIG. 2. The full bridge converter 104 outputs an AC voltage which alternates with a high frequency of 20 kHz. As indicated in FIG. 2(a), gate driving signals, s1, s2, s3, s4 of IGBT can be obtained by comparing triangular wave shaped carrier wave signals having the same frequency as the output frequency of the full bridge converter 104 with the signals indicating the positive voltage command and the negative voltage command. Here, in order to make on/off control supplementarily, a non-lapping period of approximately several microseconds is provided between the s1 and the s3, and between the s2 and the s4. The AC voltage indicated in FIG. 2 (c) can be obtained by driving the IGBT of the full bridge converter 104 with these signals. The AC output becomes rectangular wave voltage having a peak value of Vdc, a cycle of 50 μs, and a conduction ratio proportional to the values of the positive side and the negative side voltage commands. Examples of the AC voltage waveform in the cases when the conduction ratio differ each other are indicated in FIG. 3(a) and 3(b).

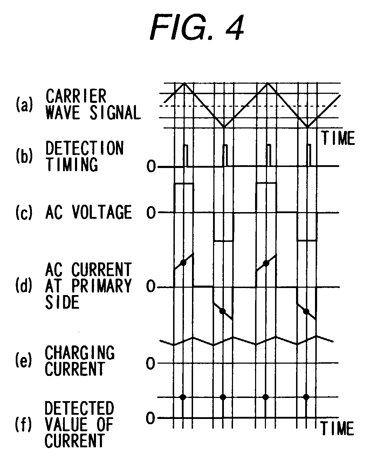

A voltage divided the primary voltage with the number of series n is output to respective of the secondary side output by applying the AC voltage to the primary side of the transformer 2. The voltage share at the secondary output is determined depending on individual battery voltage and so on. The secondary side voltage is rectified by the rectifying diode bridges 311, 321, 331 for converting to the DC voltage, and a charging current is flown depending on the difference of the above voltage and the battery voltage via the reactors 312, 322, 332. In view from the full bridge converter 104, the individual batteries of the secondary circuit of the transformer 2 are connected in series. Accordingly, the current to the primary side and the charging current to the batteries connected to respective of the secondary circuit are in a relationship of winding number ratio, and the charging current to the respective battery is equal, even if the battery voltage or internal resistance is varied with individual battery. Therefore, the charging current to the every respective battery can be controlled by controlling the current of the full bridge converter 104. The waveforms of the AC current at the primary side of the transformer and of the charging current to the respective battery are indicated in FIG. 4 (d), and (e). In accordance with the figure, it is revealed that the charging current coincides with the AC current at the primary side of the transformer during the period when s4 and s1 among the gate signals to the full bridge converter 104 are "on", or s2 and s3 are "on". Therefore, the charging current to the individual battery can be detected from the AC current at the primary side of the transformer by detecting the AC current with the current detector 105 (CT (Current Transformer) in the present embodiment) synchronized with minimum amplitude time point (valley of the triangular waveform carrier signal) of the carrier signal for generating gate signal, and maintaining the detected value until next detecting time point as indicated in FIG. 4 (f). Using the detected current value at the primary side of the transformer, the charging current to the secondary batteries connected to the secondary side of the transformer can be controlled to be equal each other, even if there are variation in voltage, internal resistance, and others of the individual batteries, by controlling the duty of the full bridge converter so that the detected current value at the primary side of the transformer becomes equal to the charging current reference. Here, the voltage of the individual battery can be detected based on a common potential, because the secondary side of the transformer is insulated respectively, and each one of the terminals of the individual battery can be grounded respectively.

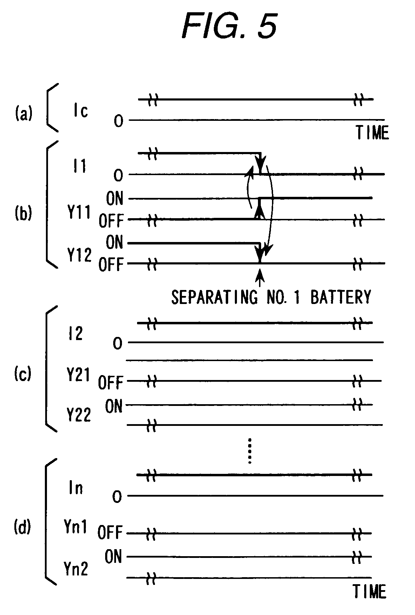

In accordance with the present embodiment, when a failed battery is detected during charging, it is necessary to separate the failed battery from the secondary circuit and to continue charging the other batteries, because the charging is performed under a condition that the batteries are connected in series via the transformer. When the battery voltage is varied during the charging period, it is necessary to make the charging current to the individual battery bypass respectively and to adjust the charging current to the individual battery, respectively. The operation waveform at this case is indicated in FIG. 5. The output current from the full bridge converter 104 is expressed by Ic, the charging current to the individual battery is expressed by I1, I2,...In, respectively. When each of the switches of the secondary circuit Y11, Y21, Y31 are "off", and the switches Y12, Y22, Y32 are "on", the batteries are charged normally. On the contrary, the corresponding secondary circuit can be shunted by making the first switch of the secondary circuit Y11 "on", and the charging current flows to the switch Y11 side and the battery 4 can be made bypass. The battery 4 can be separated from the charging circuit by making the switch Y22 "off" after making it bypass. Here, if a semiconductor switching element such as power MOSFET (Metal Oxide Semiconductor Field Effect Transistor) is used as the switch Y11, the bypass of the voltage of the individual battery can be controlled precisely, and accordingly, the current of the respective secondary circuit can be compensated. The load is varied in view from the full bridge converter 104 by operating respective of the switches Y11, Y21, Y31 to be on/off respectively, but the output current from the full bridge converter 104 can be controlled to a desired value.

As described above in detail, in accordance with the present embodiment, plural batteries connected in series at the secondary side of the transformer can be charged simultaneously as an unit by the transformer, wherein the primary side is connected in a multi-series manner.

Accordingly, an advantage to make the circuit composition simple in comparison with the case when plural batteries are charged by individual power source is realized.

Furthermore, such an advantage is realized that the plural batteries can be charged simultaneously as an unit effectively without increasing the current, because the batteries are charged under a condition that the battery voltage are connected in series.

The voltage of the respective battery can be measured based on a common potential, because the batteries connected to the secondary side of the transformer are insulated respectively, and such an advantage is realized that the voltage of the plural batteries can be measured readily.

Such an advantage is realized that the charging current can be controlled as an unit irrelevant to the number of the secondary circuit by detecting the current of the primary side of the transformer in synchronizing with the switching operation of the full bridge converter, and controlling the output current of the full bridge converter so as to coincide with the desired charging current reference.

Such an advantage is realized that the current eliminating the influence of current ripple of the charging current can be detected, because the value at approximately middle point of the current ripple according to the duty control of the full bridge converter can be detected as the detected value of the current.

In accordance with the present embodiment, an arbitrary battery, which is detected as a failed battery, can be separated from the charging circuit even during the charging operation. Therefore, the failed battery can be separated with continuing the charging operation to other batteries.

There is an advantage that variation in battery voltage can be complemented by compensating the charging current to the individual batteries respectively using the function to make the charging current bypass.

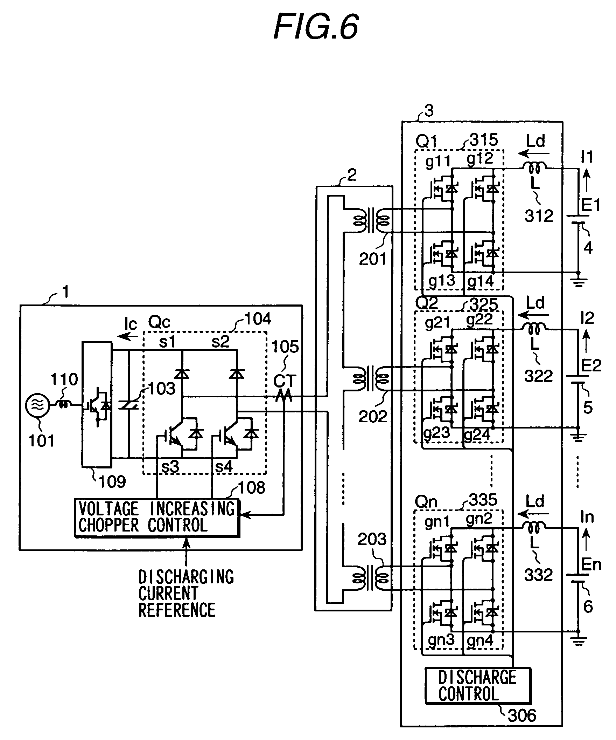

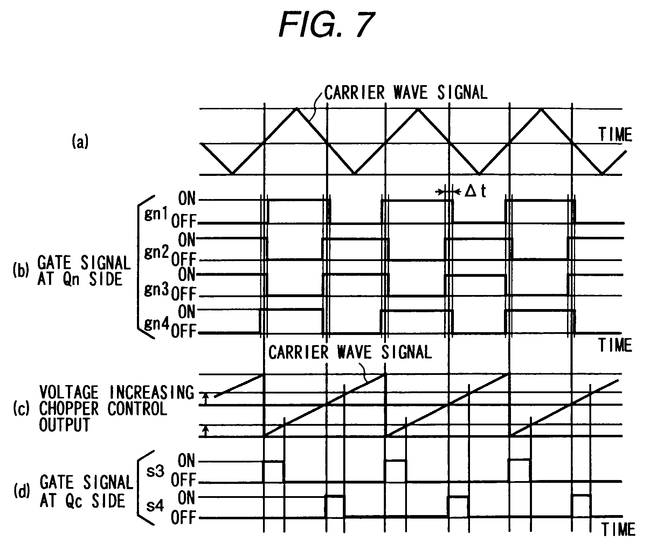

Next, the second embodiment of the present invention is explained referring to FIG. 6. Respective of the reactor 312, 322, 332 is connected to output of the individual battery 4, 5, 6, respectively; the output of the reactor is converted to AC voltage by the full bridge converter 315, 325, 335; and respective of the AC voltage is supplied to plural secondary side windings of the transformer, respectively. Here, the full bridge converter is composed of power MOSFET. In accordance with the transformer 2, the primary windings are connected in a multi-series manner to corresponding secondary windings, the electric power charged to the respective battery is regenerated to the power source 101 via ballast capacitor 103, regenerating converter 109, and reactor 110 by making the output voltage at the primary side operate for increasing voltage chopping operation by the converter 107 and its controlling circuit 108. The gate signals of the full bridge converters 315, 325, 335 of the respective battery and the gate signal of the converter 107 side at this time are indicated in FIG. 7, respectively. As indicated in FIG. 7 (c) and (d), the converter 107 operates to make the gate signals s3, s4 of the IGBT element in the negative side arm on/off with a designated chopper cycles. During the "on" period of the s3 and s4, the batteries at the secondary side of the transformer become short circuit conditions via the reactors 312, 322, 332. On the other hand, during the "off" period of the s3, s4, the electric power stored in the reactor of the respective battery is released to the ballast capacitor side 103. Here, the DC voltage of the respective battery is converted to the AC voltage having a fixed frequency and a fixed voltage (here, the voltage of the AC voltage is proportional to the battery voltage) by the full bridge converters 315, 325, 335, of the respective battery. Therefore, a same gate signal is given to all the full bridge converters of the batteries in synchronizing with the carrier signal for generating gate signal of the converter 107 as indicated in FIG. 7(a), (b). Furthermore, a short circuit period signal for making the upper and lower arms a short circuit is given, when an on/off switching time of the power MOSFET of the full bridge converters 315, 325, 335. Accordingly, the current of the reactor of the respective battery can be controlled continuously even at the time for switching the positive and negative polarity of the AC voltage. Furthermore, the short circuit period for the polarity switching time of the full bridge converter can be provided during the "on" period of the chopper for increasing voltage by setting the short circuit signal so as to synchronize with the "on" period of the chopper controlling signal of the converter 107. Accordingly, the battery voltage can be converted to the AC by every battery, respectively, and the discharge can be performed simultaneously as an unit under the condition that respective of the batteries is connected in a multi-series manner with the transformer 2 with giving no effect to the chopper operation for increasing voltage. Even during the discharging period, the current value corresponding to the discharging current from respective of the batteries can be discharged by detecting the AC current at the primary side of the transformer in synchronizing with the "on" period of the chopper for increasing voltage. The above operations are in the relation as same as the operation for detecting the charging current at the primary side of the transformer in the simultaneous charging as an unit.

In accordance with the second embodiment of the present invention as described above in detail, control of the chopper for increasing voltage can be performed under a condition that the battery voltage is converted to AC and the voltage is connected in series by the transformer. Therefore, the discharge can be performed simultaneously as an unit without providing any power source for discharging to respective of the batteries, and the discharge can be performed readily with simple control. Furthermore, such an advantage can be realized that the discharge as an unit can be performed without being influenced with the short circuit period accompanied with the AC conversion of the respective battery voltage by synchronizing the gate signal for controlling the chopper for increasing voltage with the gate signal of the full bridge converter for converting respective of the batteries to AC voltage.

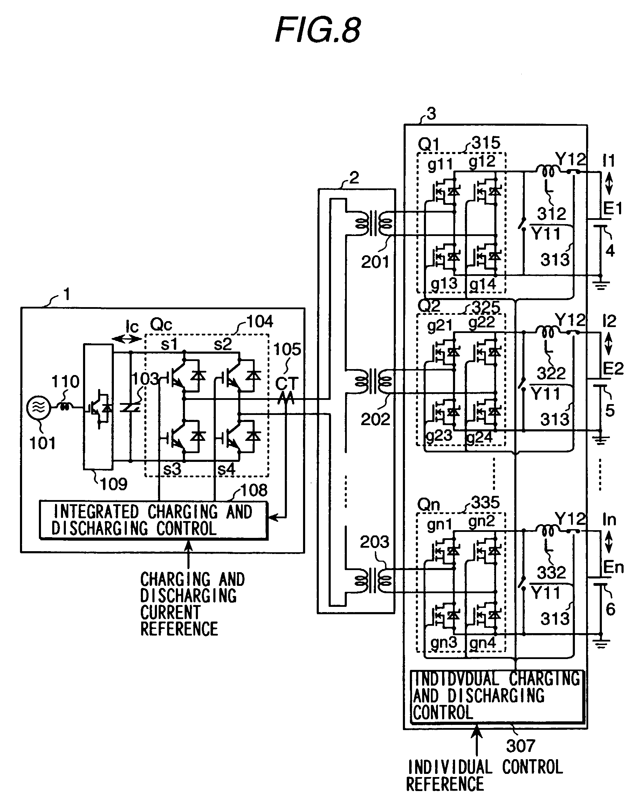

The third embodiment of the present invention is explained hereinafter referring to FIG. 8.

The third embodiment differs from the first and second embodiments in the full bridge converter 104 for charging and discharging as an unit, and the full bridge converters 315, 325, 335 for each of the batteries. In accordance with making the both converters as the full bridge converters and controlling the gate signals to them, charging as an unit, discharging as an unit, separating failed battery, controlling the charge as an unit, controlling respective of the charge, controlling the discharge as an unit, and controlling the respective of the discharge can be performed.

As explained above, in accordance with the third embodiment, such an advantage is realized that controlling the charge and discharge in various operation modes can be switched and performed by controlling each of the gate signals with a same circuit composition.

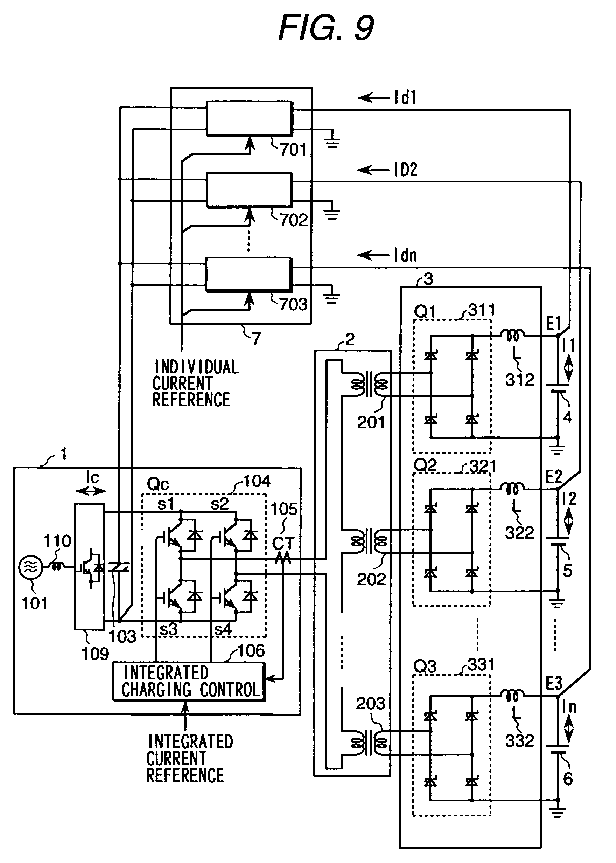

The fourth embodiment of the present invention is explained hereinafter referring to FIG. 9.

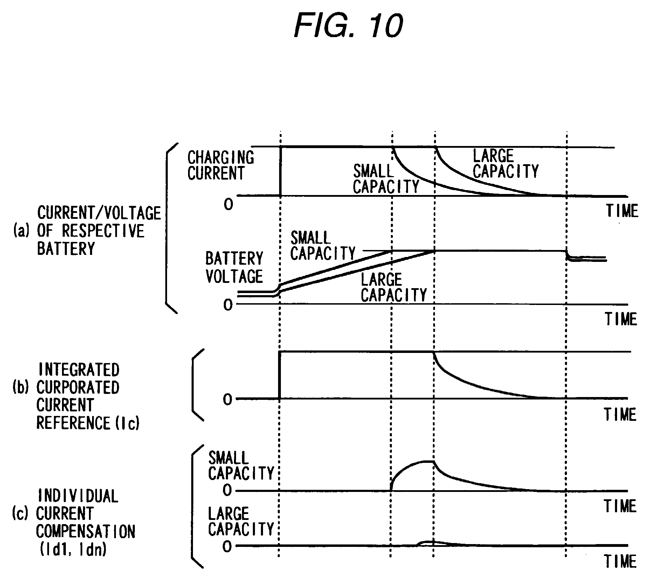

The present embodiment is composed by adding individual discharge power source 7 to every batteries in the first embodiment indicated in FIG. 1. The individual discharge power source 7 is connected between respective output of the individual DC/AC converter 3 (that is, between terminals of respective battery) and the ballast capacitor 103. The individual discharge power source is composed of a current controlled insulating type switching power source. In accordance with the present composition, the charging current Ic2 as an unit is supplied from the full bridge converter 104 to respective of the batteries during charging operation. On the other hand, individual current reference is given to respective of the individual discharge power source, and the current Id1, Id2, Id3 are regenerated to the ballast capacitor 103 from respective battery in accordance with the current reference. Accordingly, the charging current to respective battery becomes a value obtained by detracting the current Id1, Id2, Id3 to individual discharge power source from the charging current Ic2 as an unit. Therefore, the charging current to respective battery can be corrected corresponding to variation in respective battery capacity by operating the individual discharge power source during charging as an unit. On the other hand, during discharging period of the respective battery, the discharging current Id1, Id2, Id3 from respective battery can be regenerated to the power source 101 side by the individual discharge power source. Accordingly, charging as an unit, controlling individual charge, and individual discharging can be performed. The waveform in these cases are indicated in FIG. 10.

In accordance with the fourth embodiment as explained above in detail, compensation including individual charging control at charging as an unit can be performed by the individual discharge power source for discharging. Therefore, charging and discharging control can be performed with a simple circuit composition. Such an advantage is realized that discharge of respective battery can be controlled with a wide range of battery voltage including a condition that the battery voltage is small, because the individual power source having a large voltage increasing ratio is used for discharging operation.

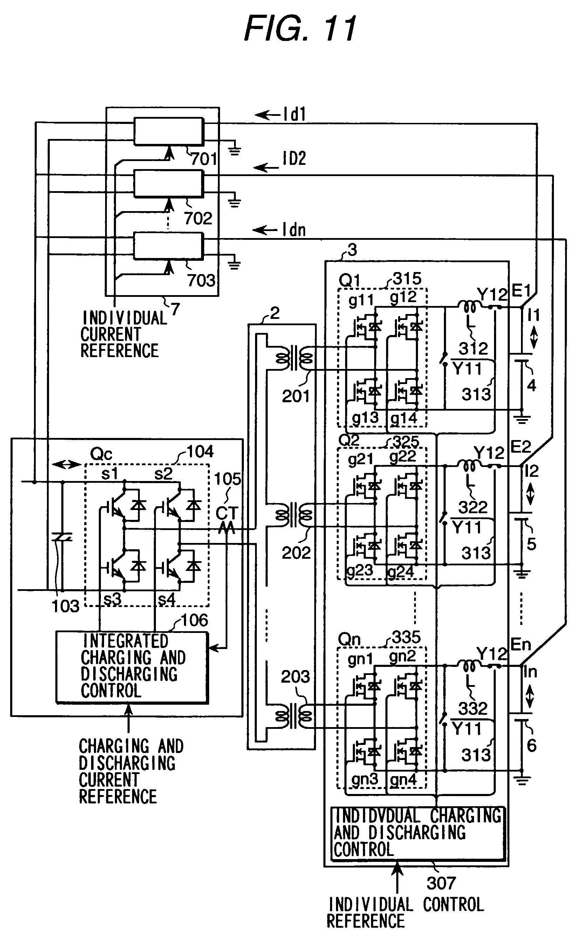

The fifth embodiment of the present invention is indicated in FIG. 11. The fifth embodiment differs from the fourth embodiment indicated in FIG. 9 in adding a power source for individual discharge which makes it possible to discharge each of the battery respectively, in addition to the charge and discharge apparatus which is capable of charging and discharging as an unit. In accordance with the present embodiment, the individual discharge power source is added to the full bridge converter which is capable of charging and discharging as an unit. Therefore, the capacity of the individual discharge power source can be minimized to as small as just sufficient for correcting the variation in the capacity of respective battery.

In accordance with the fifth embodiment as described above, such an advantage is realized that the capacity of the individual discharge power source can be restricted to as small as just sufficient for correcting the variation in the capacity of respective battery.

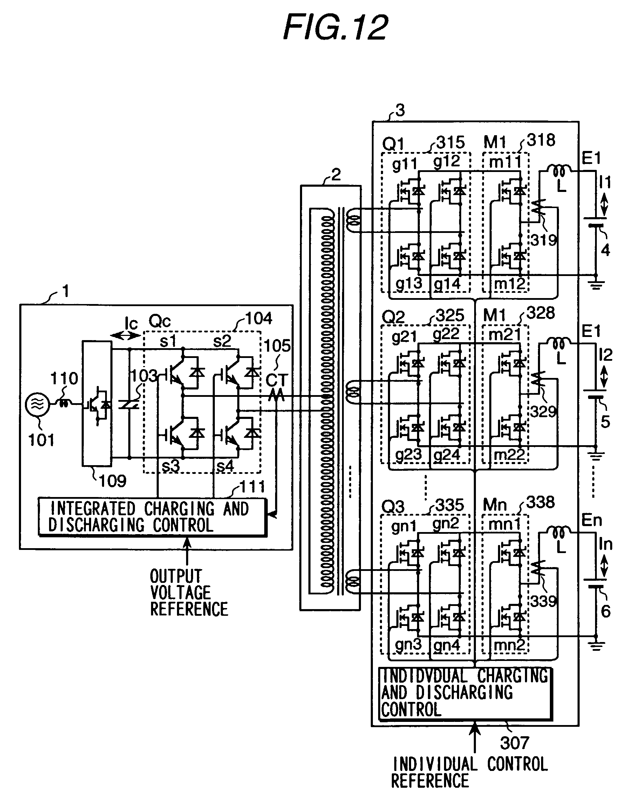

The composition of the sixth embodiment of the present invention is indicated in FIG. 12. The sixth embodiment differs from the third embodiment in the composition of the transformer 8 and adding bidirectional chopper circuit 318, 328, 338, which are connected between the respective converter such as 315 and the respective battery such as 4, to the individual AC/DC converting means 3. Here, the transformer 8 has a composition, wherein plural secondary windings are connected in parallel to the primary winding. The transformer 8 is connected in a multi-parallel manner, instead of the multi-series connection of the transformer 2. In accordance with the present embodiment, an AC output voltage of the full bridge converter 104 is output in parallel to the plural secondary windings during charging operation. Here, an output voltage reference is provided to the full bridge converter 104, and an AC output voltage is output according to the reference. The individual AC/DC converter 3 regulates the charge and discharge of the individual battery respectively as the respective output voltage from the transformer 8 is taken as the input. On the other hand, during the discharging operation, the full bridge converter 104 operates as a rectifying diode bridge by making the gate signal off to respective IGBT. The discharging current of the respective battery is converted to AC by the individual AC/DC converter 3, and connected in parallel by the transformer 8. The discharging current from the respective battery is incorporated and regenerated at the ballast capacitor side 103 by the operation of the rectifying diode of the full bridge converter 104, and the electric power is regenerated at the commercial power source 101 by the regeneration converter 109.

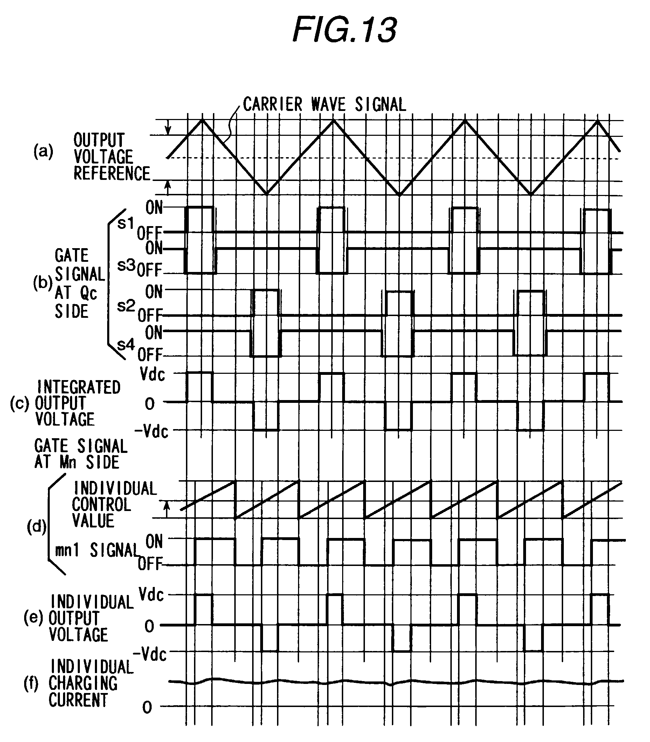

The operation waveform at the charging operation of the present embodiment is indicated in FIG. 13. The operation from FIG. 13 (a) to (c) are as same as the cases of the multi-series connection system in the embodiments 1-5, but the output voltage reference to the full bridge converter 104 is given directly as the output voltage reference. Here, the output voltage reference is set in accordance with the value of the respective battery voltage. That is, because the battery voltage is small at the initial stage of charging operation, the output voltage reference to the full bridge converter 104 is set as small, and the output voltage reference becomes large near the full charging. On the other hand, the individual charge and discharge controller 307 detects the charging and discharging current of the respective battery by the current detecting means 319, 329, 339 of the respective battery, and regulates the gate signals m11, m21,...,mn1, of the power MOSFET at the positive side arm of the bidirectional chopper circuit 318, 328, 338. The operation waveform in this case is indicated in FIG. 13 (d). That is, an individual controlling value is calculated as the result of operating the individual charge and discharge controller 307 for the respective battery, and the signals m11,m21,...,mn1 are obtained by comparison in the level with the saw-teeth waves. Accordingly, during the period when the signals m11, m21,...,mn1 are "off", the charging voltage of the respective battery can be corrected, because the AC voltage generated by the full bridge converter 104 is made "off". The waveform of the AC output at this period is indicated in FIG. 13 (g). The duty of the AC voltage is corrected as much as the individual correcting value indicated in FIG. 13 (f) to the output voltage of the full bridged converter indicated in FIG. 13 (c). In accordance with performing the correction to the respective battery, the charging current to the respective battery is compensated to maintain the desired value by correcting the variation in the respective battery voltage, the variation in the voltage share of the transformer, and others. The waveform of the individual charging current at this period is indicated in FIG. 13 (f). Accordingly, the current flown to the plural secondary side circuits which are connected in a multi-parallel manner can be controlled to be a definite value via the transformer as indicated in the present embodiment. Even in the case when correcting the charging current to the respective battery, the charging current of the respective battery can be controlled using the voltage regulating function of the bidirectional chopper circuits 318, 328, 338.

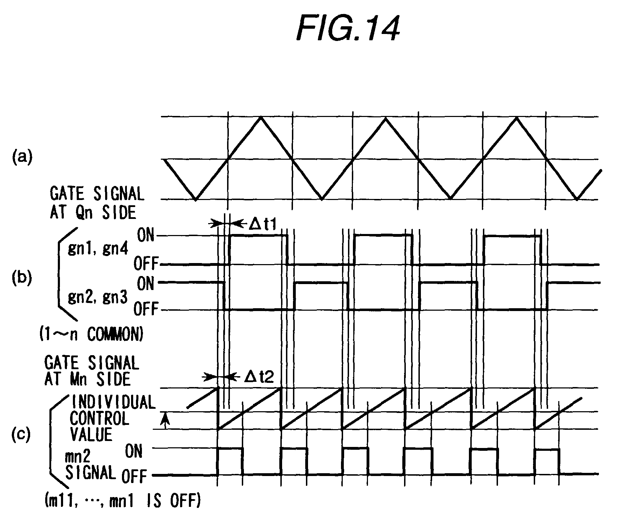

On the other hand, the operation waveform during the discharging operation is indicated in FIG. 14. Different from the third embodiment of the present invention indicated in FIG. 8, the full bridge converter 104 operates as a rectifying diode bridge, and regulates the discharging current of the respective battery by individual control of the individual battery with the individual AC/DC converter 3. Here, during the discharging operation, the battery voltage is decreased by performing the on/off operation of the gate signals m12,m22,...,mn2 at the lower side arm of the bidirectional chopper circuit 318, 328, 338 provided to the AC/DC converting means 3. Accordingly, the discharging voltage of the respective battery can be controlled respectively. The operation waveform at this period is indicated in FIG. 14 (c). Here, the individual controlling value to give the duty of the gate signals, m12, m22,..., mn2 is calculated as the result of operating the individual charge and discharge controller 307 for controlling the discharging current. As the result, the discharging as an unit can be performed by operating the rectifying diode of the full bridge converter 104, and the discharging current can be controlled by the gate signals m12, m22,..., mn2 at the lower arm of the bidirectional chopper circuits 318, 328, 338 to a desired definite value, even if the battery voltage is varied.

In accordance with the fifth embodiment of the present invention as described above in detail, such an advantage is realized that the charge and discharge circuit can be composed simply, because plural batteries which are connected in a multi-parallel manner via the transformer can be charged or discharged as an unit. Furthermore, such an advantage is realized that the number of the transformer to be provided is not necessarily proportional to the number of the secondary windings, because the transformer, wherein plural secondary windings are connected to the primary winding in a multi-parallel manner, can be composed in an incorporated manner with the magnetic core. Such an advantage is realized that the charging current and the discharging current of the respective battery can be controlled in accordance with a desired reference, and can be compensated individually, by providing the bidirectional chopper circuits to the respective secondary circuits.

A method for manufacturing secondary batteries is explained hereinafter as an embodiment of the present invention. In accordance with a manufacturing process of the secondary battery, initial charging, initial discharging, and aging are performed on the battery after assembling.

An outline of the manufacturing process of non-aqueous electrolyte secondary battery is explained hereinafter. The secondary battery is generally assembled by the steps of: applying a positive electrode active material and a negative electrode active material onto designated respective foils; winding the foils interposing a separator between; inserting into a designated container; filling the container with an electrolyte; and sealing the container for completing the assembling. As the positive electrode, lithiated cobalt oxide, a carbon material group conducting agent, and others are mixed and solved into an organic solvent to form a paste, and the mixed agent is applied onto both sides of aluminum foil. After drying, the foil is compressed by a roller. As the negative electrode material, carbon or graphite is used. The carbon or the graphite mixed with a binder is kneaded to be a paste, adhered to a copper foil, and wound as a role. Then, the both electrodes are wound interposing a separator between them in a winding step, and cut. The wound electrodes are inserted into a battery container, an electrolyte is poured into the battery container after welding a sealing cap, and the assembling steps of the battery main body is completed by sealing the cap.

The battery after the assembling is treated with initial charging and discharging, and aging, which means standing still under a charged condition. That is, the battery after assembling is charged and discharged. After charging the battery initially to a designated voltage, the battery is discharged to a designated voltage, and subsequently standing still. Accordingly, a method for manufacturing the non-aqueous electrolyte secondary battery, which is capable of confirming the capacity of the battery, and of suppressing deterioration of the charge and discharge cycle of the battery after aging is provided.

The initial charge and discharge apparatus of the present invention has an advantage that the charge and discharge can be controlled simultaneously as an unit. The charging and discharging characteristics of a large number of the batteries is determined as explained hereinafter. At the initial charging, plural batteries for testing are attached to the charge and discharge apparatus. The charge and discharge apparatus supplies charging current to the plural batteries in accordance with a designated charging current reference. During the charging, respective battery voltage is measured by the voltage detecting means of the charge and discharge apparatus. A bypass circuit for the charging current is composed orderly from the battery, of which individual battery voltage is reached at the designated set voltage. The current reference to the respective battery is made variable by the battery voltage with an incorporated charging current. Here, the charging current has a definite value at the incorporated inverter side, and the charging is continued until the charging of the last one battery is completed with separating orderly the other batteries, of which charging has been completed, from the charging circuit. Accordingly, during the charging operation or the discharging operation, incorporated discharging control in a condition that the battery voltage is maintained at a definite value becomes possible.

After charging plural batteries to a designated voltage, the initial charging is finished. Then, discharge of the plural batteries is continued as the initial discharging until the voltage of the respective battery is decreased to a designated voltage. The discharging current reference at this time is determined to make the discharging current common to all the batteries during the discharge. However, the time to reach the discharge finishing voltage of the respective battery differs each other, even if the equal discharging current is used for the discharge, based on variation in battery capacity and the like. In this case, as same as the individual separation during the charging operation, the battery of which discharge is completed by reaching at a designated discharge finishing voltage is separated orderly from the incorporated discharging condition during the discharging operation. The separation can be performed by switching on the bypass circuit at individual converter side to make the discharging current bypass the objective battery, and accordingly, the discharge of the respective battery can be completed until the designated discharge finishing voltage. After finishing the incorporated charge and discharge treatment, the batteries are separated from the charge and discharge circuit, and performed an aging treatment. The charge and discharge treatment is completed by charging the battery voltage, which is decreased during the aging treatment, to a designated voltage.

In accordance with the charge and discharge apparatus or the method based on the present invention as explained above in detail, the incorporated initial charge and discharge treatment and aging treatment become possible in their manufacturing process.

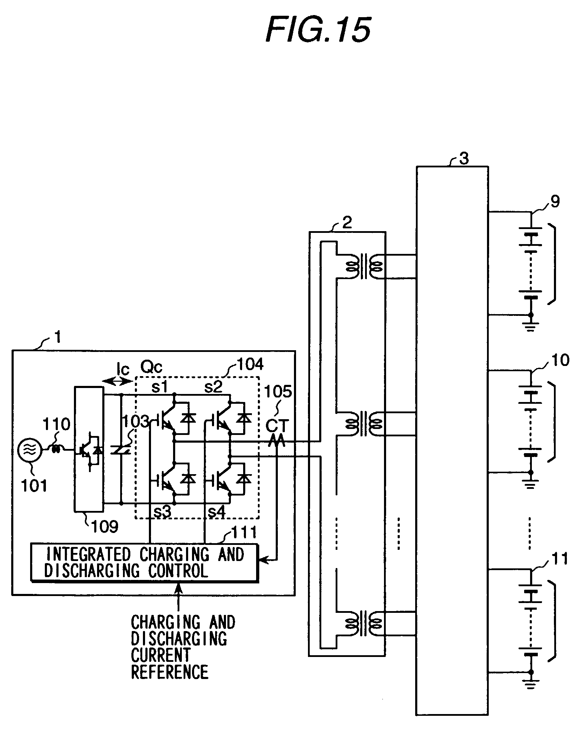

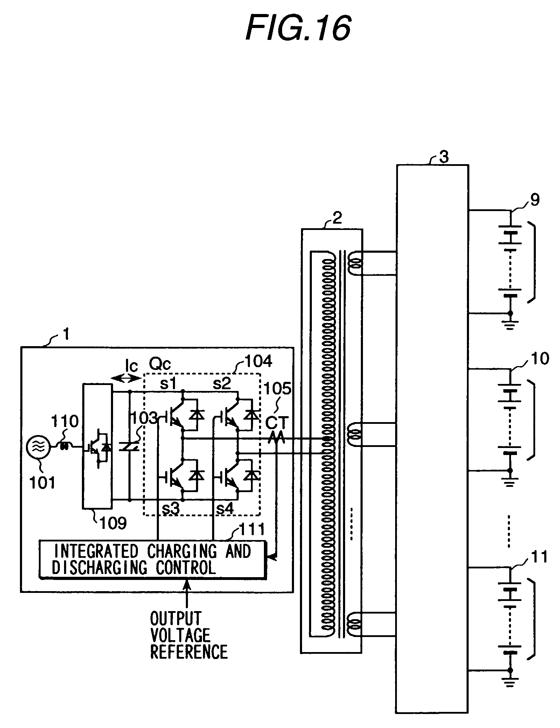

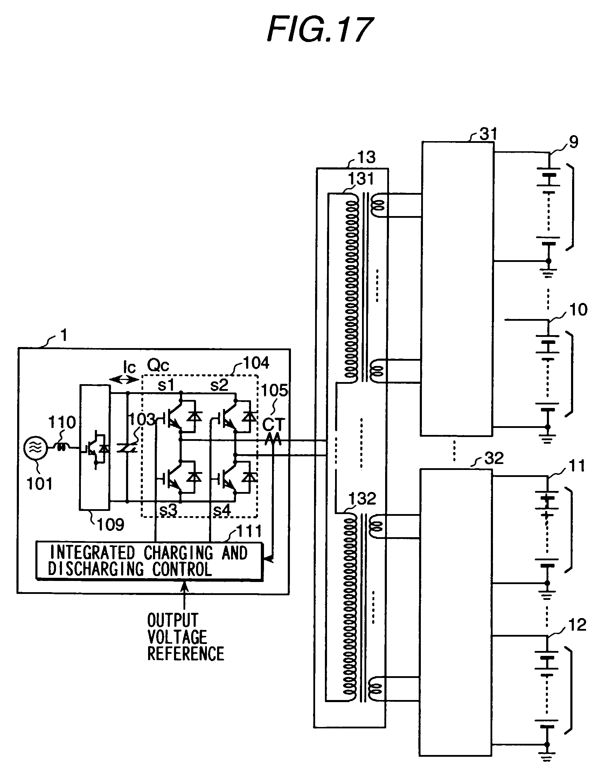

As embodiments of the present invention, charge and discharge apparatus for a set of batteries connected in multi-series are indicated in FIGs. 15, 16, and 17. The composition of the charge and discharge apparatus is as same as any one of the embodiments explained previously, but differs in charging and discharging the set of batteries instead of the unit battery. In accordance with the embodiment indicated in FIG. 15, sets of batteries are connected in a multi-series manner via the transformer 2, and the set of batteries are charged and discharged simultaneously as an unit by the full bridge converter 104. In accordance with the embodiment indicated in FIG. 16, sets of batteries are connected in a multi-parallel manner via the transformer 8, and the set of batteries are charged and discharged simultaneously as an unit by the full bridge converter 104. In accordance with the embodiment indicated in FIG. 17, sets of batteries connected in a multi- series manner are connected in a multi-parallel manner via the transformer 13, and the set of batteries are charged and discharged simultaneously as an unit by the full bridge converter 104. As explained above, such an advantage is realized that plural sets of batteries can be charged and discharged by a simple composition by charging and discharging simultaneously as an unit via the transformer even if the object is sets of batteries which is composed of unit batteries connected in a multi-series manner.

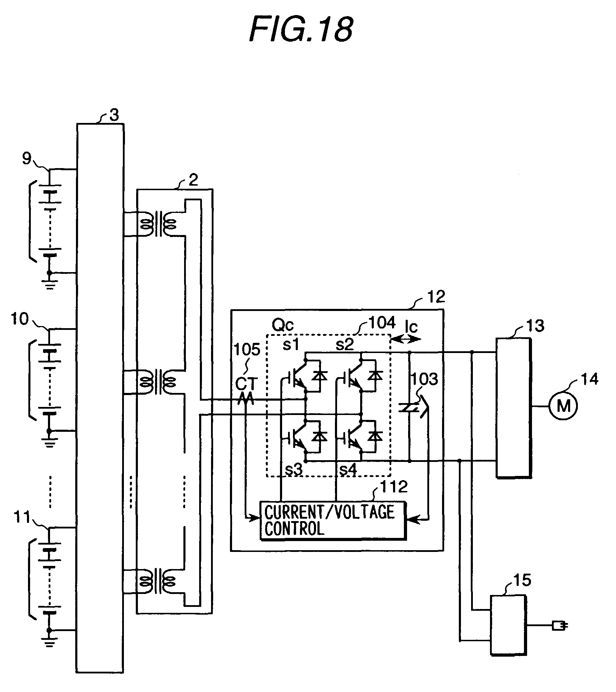

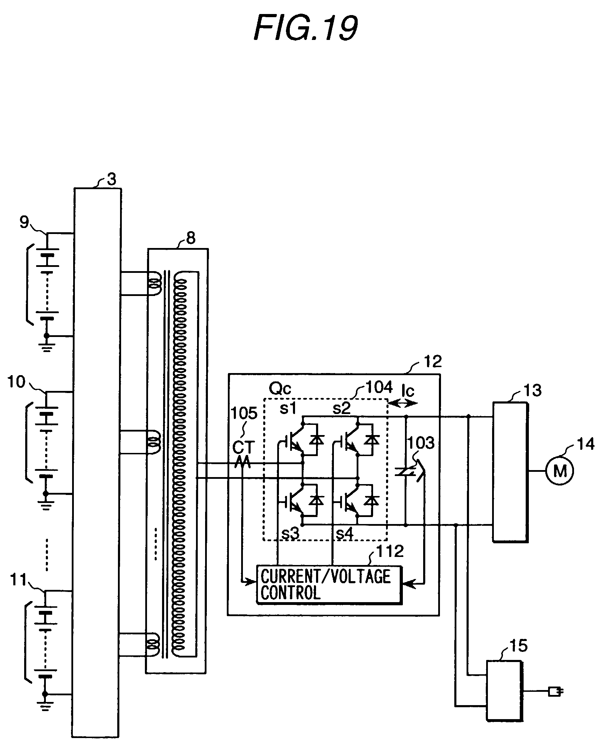

As other embodiments of the present invention, application examples of the present invention to electric vehicles are indicated in FIG. 18 and FIG. 19. In accordance with FIG. 18, plural sets of batteries 9, 10, 11 are connected in a multi-series manner via the transformer 2. The electric vehicle is driven with supplying electric power of the batteries to an induction motor via the inverter 12 and the inverter 13, which is connected to DC side of the converter 12, by discharging energy of the sets of batteries with the incorporated converter 12. On the other hand, the respective battery is charged by supplying a DC voltage to the incorporated converter 12 from the charger 15 and a charging current is supplied to the respective battery from the incorporated converter 12 via the transformer 2. FIG. 19 indicates a case wherein the sets of batteries are connected in a multi-parallel manner via the transformer 8. In accordance with the present embodiment, such an advantage is realized that the sets of batteries can be managed separately, and can be changed individually, because plural sets of batteries are combined together in an insulated condition each other and charging and discharging can be performed simultaneously as an unit. Furthermore, by separating the sets of batteries, such an advantage is realized that the voltage and total capacity of the set of batteries can be restricted.

The embodiments indicated in FIG. 18 and FIG. 19 can be applied not only to electric vehicles, but also to various induction motor driving systems. The system of the present embodiment can be applied not only to induction motors, but also to motors driven by inverter such as brushless motors and the like.

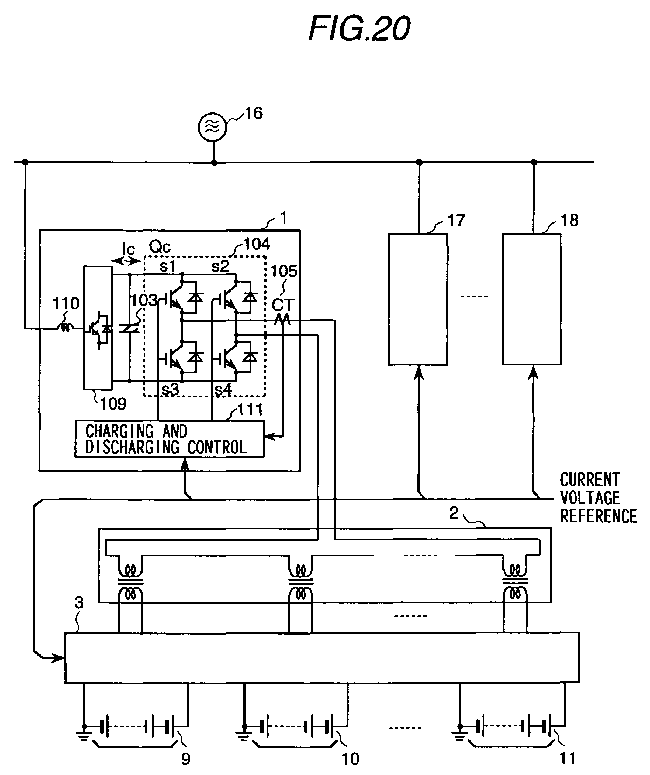

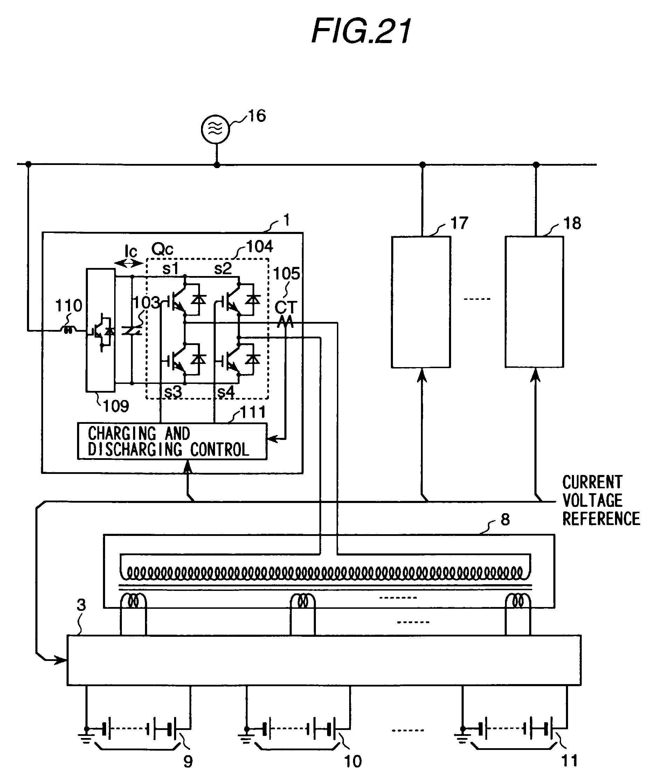

Examples of applying the present invention to an electric power storage apparatus are indicated in FIG. 20 and FIG. 21, as other embodiments of the present invention. In accordance with FIG. 20, sets of batteries 9, 10, 11, i.e. an electric power storage means, are combined in a multi-series manner via the transformer 2, and connected to the electric power system 16 via the incorporated converter 1. FIG. 21 indicates a case wherein the sets of batteries are combined in a multi-parallel manner via the transformer 8. In accordance with the present embodiments, the respective set of batteries are arranged separately, and such an advantage is realized that the sets of batteries are readily changeable.

In accordance with the present invention, plural batteries of at least two, or sets of batteries can be charged and discharged simultaneously as an unit. Therefore, a charge and discharge apparatus can be composed with more simple composition, in comparison with a case when an unit battery or a set of batteries is charged and discharged individually with an individual charge and discharge power source. In the incorporated charging, batteries can be charged or discharged under a condition that the batteries are connected in a multi-series manner or a multi-parallel manner. Therefore, the batteries can be charged or discharged under a condition that the output voltage of the converter for charging and discharging is maintained at a high voltage. Accordingly, such an advantage is achieved that the current capacity of power elements composing the converter and the copper loss caused by the current flown through the converter can be made small, and an effective charge and discharge power source can be composed.

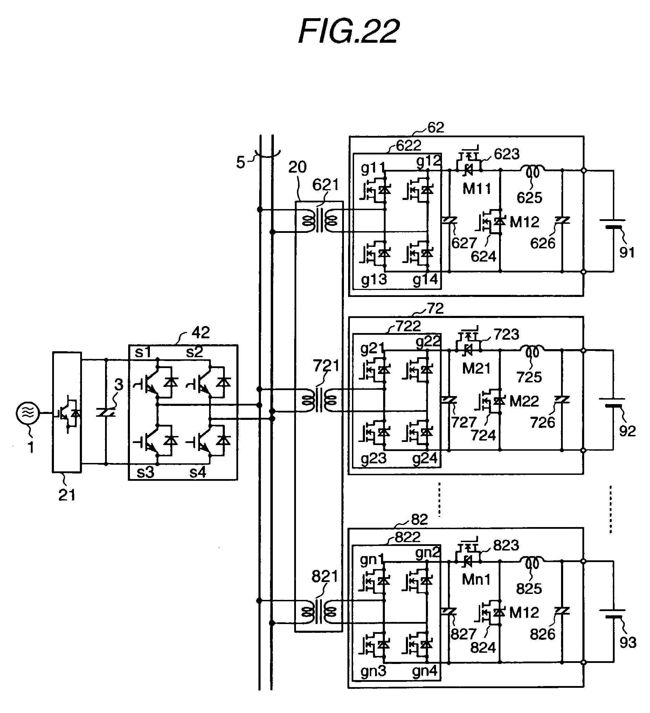

An embodiment of the present invention is indicated in FIG. 22. In accordance with FIG. 22, the reference sign 1 indicates a commercial power source, 21 is a power regeneration converter, 3 is a ballast capacitor, 42 is a full bridge converter, 5 is distributing wiring of a high frequency voltage, 62, 72, 82 are n pieces of electric power converting portions, and 91, 92, 93 are n pieces of secondary batteries to be charged or discharged. One of the electric power converting portion 62 is composed of a high frequency transformer 621, a full bridge converter 622, a ballast capacitor 627, chopper circuits 623, 624, a reactor 625, and a capacitor 626. Other electric power converting portions 72, 82 are composed in a same manner. Here, the full bridge converter 42 is composed of an IGBT and switches S1, S2, S3, S4, respective of which is composed of diodes connected in parallel. The full bridge converter 622 is composed of a power MOSFET, and switches G11, G12, G13, G14, respective of which is composed of diodes connected in parallel. Respective of the chopper circuits 623, 624 is also composed of a power MOSFET, and switches M11, M12, respective of which is composed of diodes connected in parallel. The full bridge converters 722, 822, the chopper circuits 723, 724, and the chopper circuit 823, 824 are composed in a same manner as above.

The embodiment indicated in FIG. 22 is explained in detail hereinafter. The present embodiment is an electric power converting device which converts DC voltage obtained by rectifying AC voltage from the commercial AC power source 1 by the regeneration converter 21 and smoothing by the ballast capacitor 3 to a high frequency voltage. The full bridge converter 42 to be the AC power source is connected to the distributing wiring (high frequency wiring portion) 5. The distributing wiring is connected to the primary winding of the transforming apparatus 20 including plural transformers, that is, high frequency transformers 621, 721, 821. The primary winding is composed by connecting the primary side windings of the plural high frequency transformers, 621, 721, 821, in parallel via the distributing wiring 5. The secondary side windings of the respective high frequency transformers are plural secondary windings of the transforming apparatus 20. Plural electric power converting portions 62, 72, 82 are connected to the plural secondary windings. In accordance with the present embodiment, an electric power converting portion is connected to each of the plural secondary windings. The electric power converting portion 62 comprises: the full bridge converter 622, the AC side of which is connected to the secondary winding of the high frequency transformer 621, for converting a high frequency voltage transmitted from the high frequency transformer 621 to a DC voltage; ballast capacitor 627 and chopper circuits 623, 624, which are connected to DC side of the full bridge converter 622; and the reactor 625 and the capacitor 626, which are connected to the full bridge converter 622 via the ballast capacitor and chopper circuits 623, 624. The composition of other electric power converting portions 72, 82 are as same as the composition of the electric power converting portion 62 explained above.

An operation for charging n pieces of the secondary batteries, 91, 92, 93 is explained hereinafter.

In this case, the full bridge converter 622 of the electric power converting portion 62 operates as a rectifying diode bridge circuit, and respective of the chopper circuits 623, 624 operates as a chopper circuit for decreasing voltage. The electric power converting portions 72, 82 operate as same as the above electric power converting portion 62. The AC input from the commercial AC power source 1 is rectified by the regeneration converter 21, and converted to a DC voltage by the ballast capacitor 3. The full bridge converter 42 converts the DC voltage from the ballast capacitor 3 to a high frequency voltage. The high frequency voltage is supplied to each of the electric power converting portions 62, 72, 82 by the high frequency voltage distributing wiring 5. The electric power converting portion 62 converts the input high frequency voltage to a DC voltage by diode rectifying operation of the and the full bridges converter 622.

On the other hand, the chopper circuits 623, 624 are operated as chopper circuits for decreasing voltage by making the switch M12 of the chopper circuit 626 "off", and controlling the switch M11 of the chopper circuit 623 with on/off control. The output voltage can be made high by making the "on" period of the M11 long, and the output voltage can be made low by making the "on" period short. The output voltage is smoothed by the reactor 625 and the capacitor 626 for controlling charge of the secondary battery 91. Similarly, charge of the secondary batteries 92 and 93 are controlled by the electric power converting portions 72 and 82, respectively.

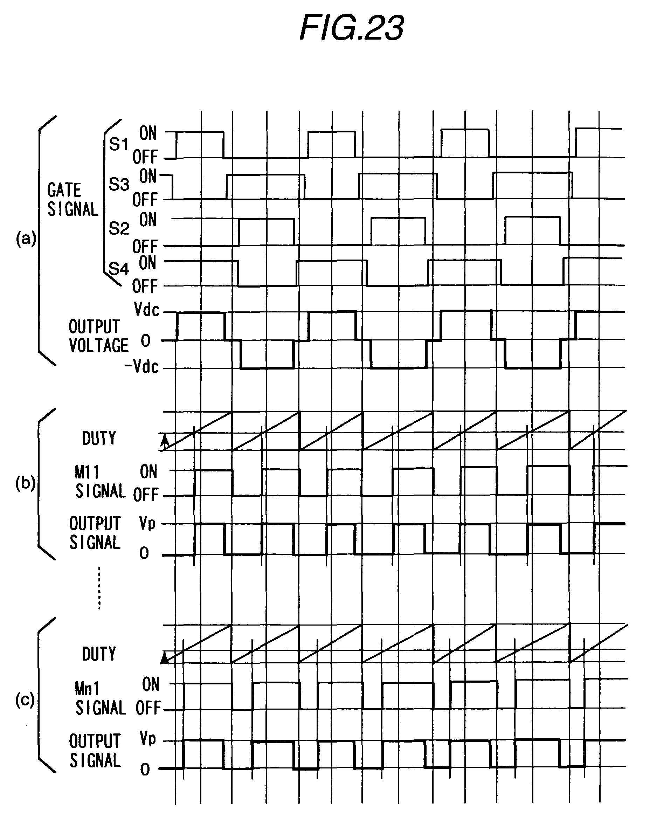

The operating waveform of the present embodiment is indicated in FIG. 23. The gate signals to the switches S1, S2, S3, S4 composing the full bridge converter 42 are given as indicated in FIG. 23 (a). Accordingly, an output voltage of the rectangular waveform can be obtained. When the gate signals are given so that the frequency of the output voltage becomes 20 kHz, the period of the output voltage becomes 50 μs. The high frequency voltage is supplied to n pieces of electric power converting portions 62, 72, 82 by the distributing wiring 5. At the electric power converting portions 62, 72, 82, the chopper circuits 623, 723, 823 are controlled by on/off control. A ratio of "on" period is defined as "a duty" now. In accordance with varying the duty by every electric power converting portion depending on the necessary output voltage, even if a definite AC voltage is input via the distributing wiring of the high frequency voltage, the output voltage can be controlled respectively by every electric power converting portion. Examples of the operation waveform at this time are indicated in FIG. 23 (b), (c). The example indicates a case when the "on" period of the M11 is controlled to be shorter than the "on" period of the Mn1. The example indicates that the DC output can be controlled individually with respective channel by controlling the high frequency voltage generated as an unit with respective of the electric power converting portions 62, 72, 82. The distribution wiring 5 of the high frequency voltage is composed so that wiring impedance becomes minimum in order to supply same AC voltage to respective electric power converting portions.

Next, an operation for discharging n pieces of secondary batteries 91, 92, 93 is explained. At this time, the chopper circuits 623, 624 of the electric power converting portion 62 operate as chopper circuits for increasing voltage, the full bridge converter 622 operates as a full bridge inverter circuit, and the full bridge inverter 42 operates as a rectifying diode bridge circuit, respectively. The discharging electric power from n pieces of the secondary batteries is controlled individually by connecting the n pieces of the secondary batteries 91, 92, 93 to both ends of the ballast capacitor 626, 726, 826 in the n pieces of the electric power converting portions 62, 72, 82. The chopper circuits 623, 624 are operated as chopper circuits for increasing voltage by making the switch M11 of the chopper circuit 623 "off", and controlling the switch M12 with on/off control. The discharging current can be made large by making the "on" period of the M12 long, and the discharging current can be made small by making the "on" period short. On the other hand, the full bridge converters 622, 722, 822 convert the voltage of the ballast capacitors 627, 721, 821 to AC in accordance with the same gate signal. The AC is input to the full bridge converter 42 via the high frequency transformers 621, 721, 821, and the distributing wiring 5 of the high frequency voltage. The full bridges converter 42 operates in a diode rectifying mode, and the output obtained by rectifying the high frequency voltage is output to the ballast capacitor 3. The regeneration converter 21 converts the voltage at the ballast capacitor 3 to AC, and regenerates in the commercial AC power source 1.

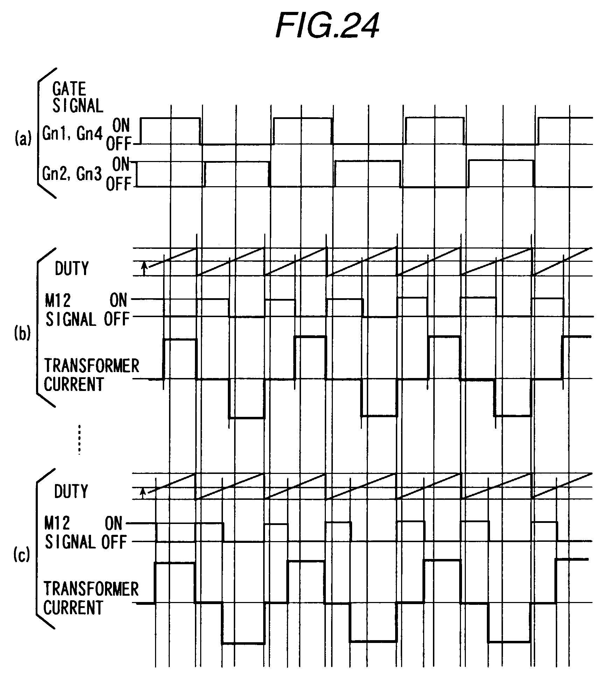

The operating waveform of the present embodiment is indicated in FIG. 24. A same gate signal is given to the switches Gn1, Gn2, Gn3, Gn4 of the respective full bridge converter as indicated in FIG. 24 (a). The chopper circuit for increasing voltage of the respective electric power converting portion operates with independent duty as indicated in FIG. 24 (b), (c) in order to control the discharging current from the respective secondary battery, individually. As the result, an AC current varying positive/negative alternately is flown from the respective electric power converting portion to the full bridge inverter side via distributing wiring of the high frequency voltage. Accordingly, the discharging current from the respective secondary battery is regenerated in the commercial AC power source 1.

In accordance with the present embodiment as described above in detail, such advantages are realized that influence of wiring impedance can be made minimum and the number of the components can be decreased, because an AC voltage given as an unit can be distributed to respective of the electric power converting portions by the distributing wiring 5 composed of parallel conductors, and the duty at the chopper circuit can be controlled synchronizing with the conversion to the AC power at the full bridge converter 4. Furthermore, in accordance with the present embodiment, the number of components can be decreased in comparison with a case when a means to convert to DC is provided to respective of the electric power converting portions, because the discharging electric power is incorporated once as AC power and, then, converted to DC power. The chopper control for controlling the discharging current can be performed synchronizing with switching of the full bridge converter for converting the output to an AC as same as the first embodiment. Therefore, such an advantage is realized that the circuit composition can be made simple.

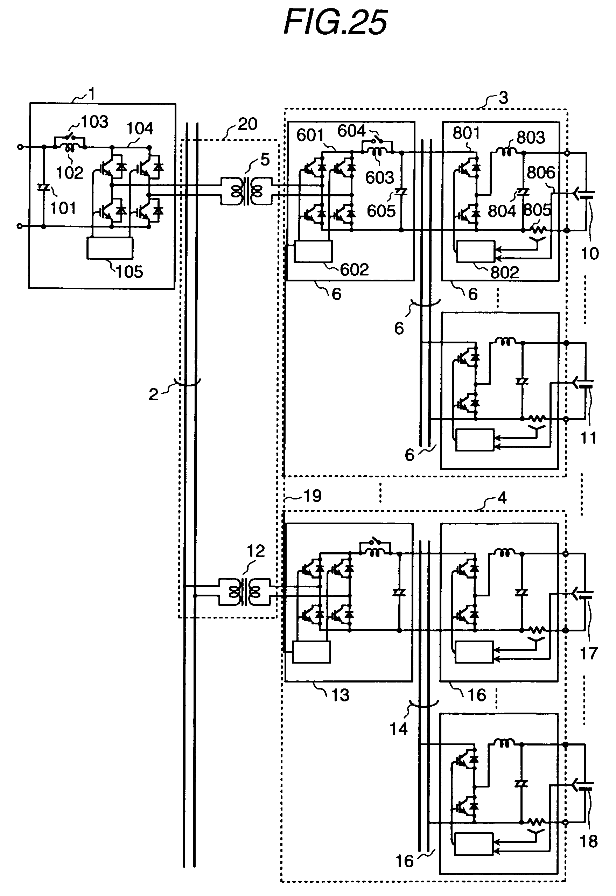

An embodiment of the present invention is explained hereinafter referring to FIG. 25.

In accordance with FIG. 25, the full bridge converter 1, which is a power converter for converting a voltage of a DC power source to a high frequency voltage and operates as an AC power source, is connected to the high frequency wiring portion 2 composed with wiring for distributing the high frequency voltage. The high frequency wiring portion 2 is connected to primary winding of the transforming apparatus 20 including plural transformer, i.e. plural high frequency transformers 5, 12. The primary winding is composed by connecting plural windings at the primary side of the plural high frequency transformers 5, 12 in parallel via the high frequency wiring portion 2. Respective of the windings at secondary side of the high frequency transformers 5, 12 composes plural secondary windings of the transforming apparatus 20. The plural electric power converting portions 3, 4 are connected to the plural secondary windings. In accordance with the present embodiment, an electric power converting portion is connected to respective of the plural secondary windings. Compositions of the electric power converting portions 3, 4, are substantially same. Therefore, the composition of the electric power converting portion 3 is explained hereinafter.

The electric power converting portion 3 comprises: the full bridge converter 6, AC side of which is connected to the secondary winding of the high frequency transformer 5, and which operates as an electric power converting circuit for converting the high frequency voltage transmitted with the high frequency transformer 5 to a voltage of the DC voltage supply; the DC wiring portion 7 connected to the DC side of the full bridge converter 6, comprising wiring for distributing the voltage from the DC voltage supply converted by the full bridge converter 6; and two chopper circuits 8, 9, connected to the DC side of the full bridge converter 6 via the DC wiring portion 7 for controlling charge or discharge of the electric power storage means 10 by controlling the pulse width of the distributed voltage from the DC voltage supply. Plurality of the chopper circuits are connected appropriately. Plurality of the full bridge converters 6 can be connected in parallel. As the electric power storage means, a secondary battery, a set of batteries, wherein plural unit batteries are connected, and electrical double layer capacitor are regarded as objects.

A composition, by which charge and discharge are performed bidirectionally on the electric power storage means, is explained hereinafter.

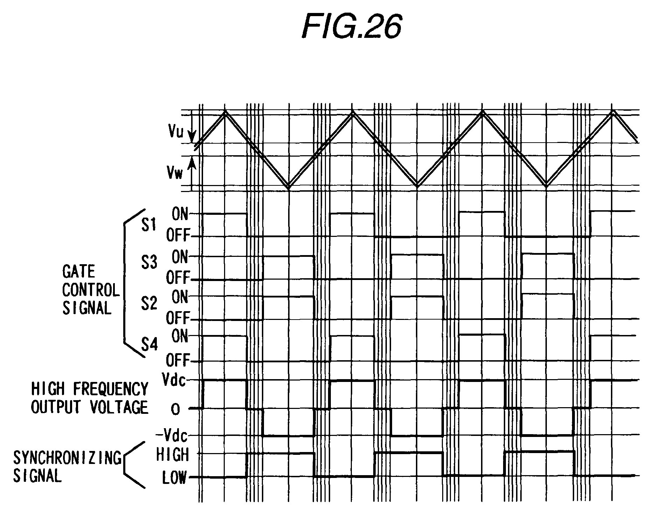

The full bridge converter 1 comprises a ballast capacitor 101, the reactor 102, a shunt switch 103, a main circuit 104 comprising an IGBT element, and a gate control circuit 105. During charging period of the respective electric power storage means 10, 11, 17, and 18, the shunt switch 103 is shunted, and the DC voltage from the ballast capacitor 101, which operates as a DC voltage supply, is converted to the high frequency voltage by the main circuit 104. On the contrary, during discharging period of the respective of the electric power storage means, the main circuit 104 operates under a condition that the diode rectifying bridge and the shunt switch 103 is open. The discharging power from respective of the electric power storage means is regenerated in the input side via the reactor 102 and the ballast capacitor 101. A relationship between the gate control circuit 105 and the high frequency output voltage during charging is indicated in FIG. 26. As indicated in FIG. 26, the gate driving signals S1, S2, S3, S4 of the IGBT are obtained by comparing the triangular carrier signal having the same frequency as the output frequency of the full bridges converter 104 and signals indicating the positive side voltage instruction and the negative side voltage instruction. The high frequency output voltage indicated in FIG. 26 can be obtained by driving the IGBT of the full bridge converter 104 with the above signals.

The high frequency voltage generated by the full bridge converter 1 is distributed to plural converting portions 3, 4, and so on via the high frequency wiring portion 2.

Next, operation of the converting portion 3 is explained.

The high frequency voltage, which is decreased corresponding to a ratio of winding number of the transformer, is generated at the secondary side of the high frequency transformer 5. The full bridge converter 6 comprises the main circuit 601 composed of power MOSFET elements, the gate control circuit 602, the reactor 603, the shunt switch 604, and the ballast capacitor 605. During charging period of the respective electric power storage means 10, 11, 17, and 18, the main circuit 601 operates under the condition that the diode rectifying bridge, and the shunt switch 103 is open, and the output voltage from the high frequency transformer 5 is supplied to the ballast capacitor 605 via the reactor 603.

On the contrary, during discharging period of the respective of the electric power storage means, 10, 11, 17, 18, the shunt switch 604 is shunted, the DC voltage from the ballast capacitor 605 is converted to the high frequency voltage by the main circuit 601, and its output is regenerated in the primary side by the high frequency transformer 5. The gate control signal during the discharging period becomes as same as the gate control signal of the full bridge converter 1 indicated in FIG. 26. Here, during the discharging period, respective of the full bridge converter 6, 13 is controlled by synchronized gate control signals. The synchronized signal during this period is indicated in FIG. 26, and transmitting lines of the synchronizing signals is indicated as 19 in FIG. 25.

Next, the DC voltage generated by the full bridge converter is distributed to respective of the chopper circuits 8, 9 via the DC wiring portion 7, and charge and discharge of corresponding electric power storage means 10, 11 is controlled. The chopper circuit 8 comprises the main circuit portion 801, the gate control circuit 802, the reactor 803, the capacitor 804, the shunt resistance 805, and the output voltage detector 806. During charging operation of the electric power storage means 10, the power MOSFET element at upper side arm of the main circuit is chopper-controlled, the chopper output voltage is converted to DC voltage by the reactor 803 and the capacitor 804, and the DC voltage is supplied to the electric power storage means 10.

On the other hand, during discharging operation of the electric power storage means, the power MOSFET element at lower side arm of the main circuit is chopper-controlled, and discharging current from the electric power storage means is regenerated to the DC voltage supply side of the ballast capacitor 605 via the DC wiring portion 7. The charge or discharge of the electric power storage means is detected by the shunt resistance 805, the terminal voltage of the electric power storage means is detected by the output voltage detector 806, and the detected values are feedback to the gate control circuit 802. the gate control circuit 802 uses the feedback these signals for controlling the chopper control duty to the main circuit element, and controlling the charging and discharging current or voltage to the electric power storage means.

In accordance with the present embodiment as explained above, both charge and discharge of the respective electric power storage means, the chopper circuits 8, 9, 15, 16 for controlling charge and discharge of plural electric power storage means can be provided to the insulated DC wiring portion 7 or 14 generated by the full bridge converter 6, 13. Therefore, even in a case when a large number of electric power storage means are charged or discharged, it is not necessary to provide full bridge converter, high frequency transformer, not full bridge converter for respective of the electric power storage means. For instance, when 200 pieces of electric power storage means are charged or discharged simultaneously, 200 pieces of the chopper circuit 8, 9, 15, 16, the same number of the objective electric power storage means, become necessary. However, if a high frequency transformer and a full bridge converter is provided respectively to 10 pieces of the chopper circuits, the high frequency transformer and the full bridge converter are necessary only 20 pieces, respectively, for 200 pieces of the electric power storage means.

The above explanation is on the case when respective of the full bridge converter can convert the voltage of the DC voltage supply and the high frequency voltage, bidirectionally, and the chopper circuit provided to respective of the electric power storage means can correspond to both charge and discharge. However, the same advantage can be obtained even with other cases when the system is composed of circuits which can correspond to only charge or discharge.

in accordance with the present embodiment, the charge and discharge apparatus, wherein the number of components can be decreased, having a preferable converting efficiency can be provided.

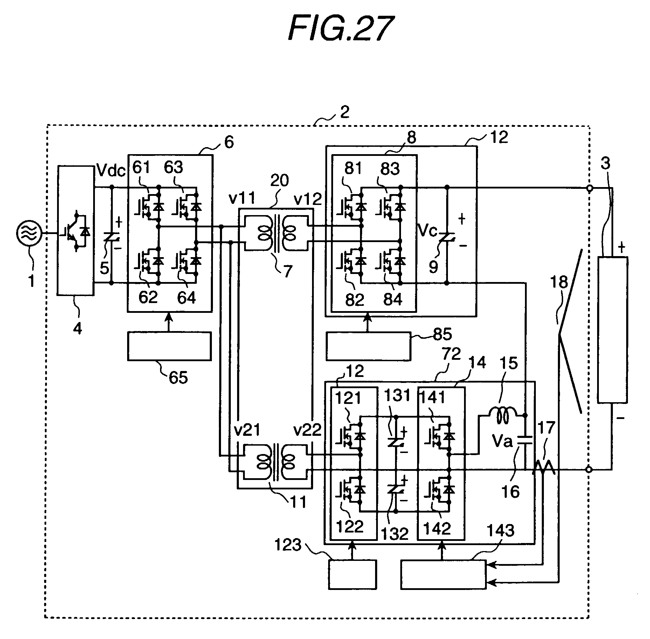

Next, other embodiment of the electric power storage means indicated in FIG. 22 is explained hereinafter referring to FIG. 27.

In accordance with the present embodiment, DC sides of plural electric power converting portions are connected in series; terminals to be connected are provided at both ends of the series connection; and the electric power storage means is connected to the terminals.

In accordance with FIG. 27, the reference sign 1 indicates a three phase AC power source, 2 is a DC power source, and 3 is an electric power storage means. The present embodiment is explained on the case when the electric power storage means is secondary batteries connected in multi-series. And the electric power storage means is charged and discharged by the DC power source 2. The DC power source 2 comprises the three phase voltage type converter 4, the ballast capacitor 5, the full bridge converter 6, the high frequency transformer 7, the full bridge converter 8, the ballast capacitor 9, the high frequency transformer 11, the half bridge converter 12, the ballast capacitors 131, 132, the half bridge converter 14, the reactor 15, and the capacitor 16. When the voltage at the electric power converting portion 62 is expressed as Vc, and the output voltage at the electric power converting portion 72 is expressed as Va, a sum of the Vc and Va is applied to the electric power storage means.

The three phase voltage type converter 4 is a three phase full bridge PWM (Pulse Width Modulation) converter having an IGBT as a switching element, and controlled so that the voltage Vdc of the ballast capacitor 5 is constant. When the effective line voltage at the three phase AC power source is 200 V, the DC voltage Vdc at the ballast capacitor 5 is set at 350 V. When electric power is output from the ballast capacitor 5 to the electric power storage means 3, the electric power is supplied from the three phase AC power source 1 to the ballast capacitor 5 via the three phase voltage type converter 4. When electric power is input from the electric power storage means 3 to the ballast capacitor 5, the electric power is regenerated to the three phase AC power source 1 from the ballast capacitor 5 via the three phase voltage type converter 4. The full bridge converter 6 has power MOSFET 61, 62, 63, 64 as switching elements, and the full bridges converter 6 is on/off controlled by the gate control circuit 65. The full bridge converter 8 has the same composition as the full bridge converter 6, and comprises power MOSFET 81, 82, 83, 84 and the gate control circuit 85. The half bridge converter 12 is composed of the power MOSFET 121, 122, and the gate control circuit 123, and the half bridge converter 14 is composed of the power MOSFET 141, 142, and the gate control circuit 143, respectively. On the contrary that the output voltage Vc of the full bridge converter 8 is constant, the output voltage Va of the half bridge converter 14 is obtained as a variable voltage, which is a positive/negative voltage divided by the two ballast capacitor 131, 132. Accordingly, the output voltage (Vc + Va) of the DC power source 2 can be controlled variably in a wide range.

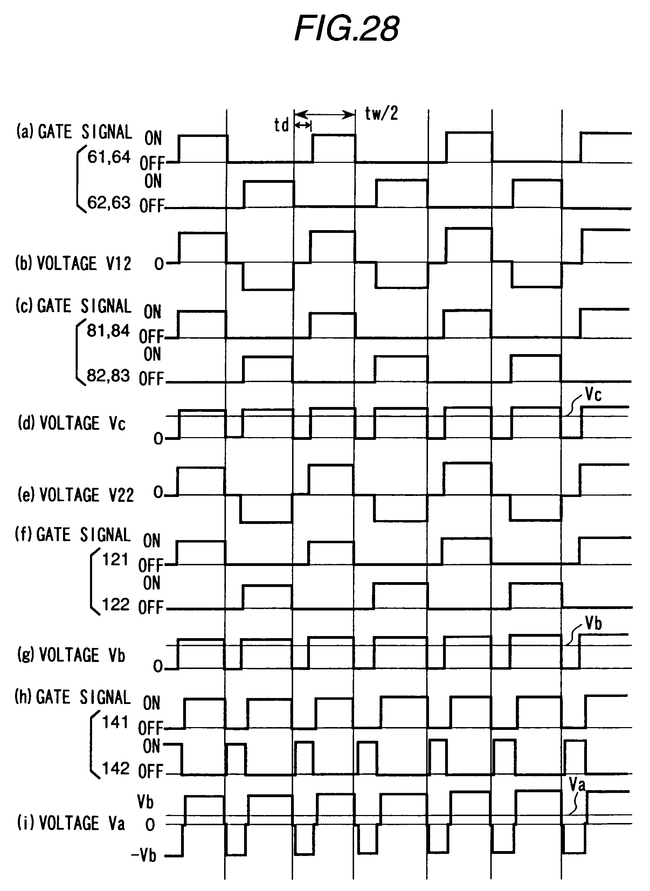

Then, operation waveforms at various portions are indicated in FIG. 28. The operation waveforms of the full bridge converter 6, the high frequency transformer 7, and the full bridge converter 8 are indicated in (a) - (d). The gate signals are given to respective of the power MOSFET 61, 62, 63, 64 of the full bridge converter 6 as indicated in (a). At this time, the secondary side voltage v12 of the high frequency transformer 7 becomes as indicated in (b). When the operation frequency of the full bridge converter 6 is set as 20 kHz, the period tw becomes 50 µs (tw/2 is 25 µs). The time td, which is the time for making both of the power MOSFET of the full bridge converter 6 off, is set as a definite value such as a several µs. The wave height value of the secondary side voltage v12 is a value obtained by multiplying the DC voltage Vdc by the winding ratio of the high frequency transformer. On the other hand, the gate signals are given to respective of the power MOSFET 81, 82, 83, 84 of the full bridge converter 8 as indicated in (c). Accordingly, when electric power is supplied from the full bridge converter 6 to the full bridge converter 8, high frequency conversion is performed by the full bridge converter 6 , and a rectifying operation is performed by the full bridge converter 8, respectively. Here, the power MOSFET of the full bridge converter 8 becomes conductive in a reverse direction when the gate signal is "on". Therefore, a case when a voltage drop of the power MOSFET by the on-resistance is smaller than the voltage drop in a normal direction of the diode, the rectifying operation is performed by the power MOSFET. On the other hand, when electric power is regenerated from the full bridge converter 8 to the full bridge converter 6, the high frequency conversion is performed by the full bridge converter 8, and the rectifying operation is performed by the full bridge converter 6, respectively. Similarly, the power MOSFET of the full bridge converter 6 becomes conductive in a reverse direction when the gate signal is "on". Therefore, a case when a voltage drop of the power MOSFET of the full bridge converter 6 by the on-resistance is smaller than the voltage drop in a normal direction of the diode, the rectifying operation is performed by the power MOSFET. The voltage Vc of the ballast capacitor 9 at this time becomes as indicated in (d).

On the other hand, operation waveforms of the high frequency transformer 11, and the half bridge converter 12, 14 are indicated in FIG. 28 (e) - (i). The secondary side voltage v22 of the high frequency transformer 11 has the same operation waveform as the v12 as indicated in (e). At this time, the half bridge converter 12 gives the gate signal corresponding to the full bridge converter 6 as indicated in (f). Consequently, as similar with the case of the full bridge converter, the voltage of the two ballast capacitors 131, 132 have the operation waveform as indicated in (a). The value of the DC voltage is expressed as Va. When electric power is supplied from the full bridge converter 6 to the half bridge converter 12, the high frequency conversion is performed by the full bridge converter 6, and the rectifying operation is performed by the half bridge converter 12, respectively. On the other hand, when electric power is regenerated from the half bridge converter 12 to the full bridge converter 6, the high frequency conversion is performed by the half bridge converter 12, and the rectifying operation is performed by the full bridge converter 6, respectively.

Next, the operation waveforms of the half bridge converter 14, the reactor 15, and the capacitor 16 are indicated in FIG. 28 (h), (i). The half bridge converter 14 controls the voltage Vb of the ballast capacitors 131, 132 in an on/off mode with a switching frequency of 40 kHz by the gate signal indicated in (h). The power MOSFET 141 at the upper side arm of the half bridge converter and the power MOSFET 142 at the lower side arm of the half bridge converter operate in a complementary mode having a non-lapping time, such as when the power MOSFET 141 is "on", the power MOSFET 142 becomes "off", and when the power MOSFET 142 is "on", the power MOSFET 141 becomes "off". The output voltage of the half bridge converter 14 becomes as indicated in (i), and the voltage of Vb is output during the power MOSFET 141 is "on", and the voltage of -Vb is output during the power MOSFET 142 is "on". The voltage Va can be obtained by smoothing the output voltage by the reactor 15 and the capacitor 16. The voltage Va is increased by increasing the duty during the "on" period of the power MOSFET 141, and becomes Vb at maximum. On the other hand, the voltage Va is decreased by increasing the duty during the "on" period of the power MOSFET 142 (that is, extending the "off" period of the power MOSFET 141), and becomes -Vb at minimum.

As explained above, the voltage Va can be varied in the range from -Vb to Vb by controlling the duty of the power MOSFET at the upper and the lower arms of the half bridge converter. The half bridge converter 14 can transmit electric power bidirectionally from the ballast capacitor 131, 132 to the capacitor 16, or from the capacitor 16 to the ballast capacitors 131, 132.

When the voltage of the ballast capacitor 9 is expressed by Vc, and the voltage of the capacitor 16 is expressed by Va, the output voltage V of the DC power source 2 is expressed by the following equation:

$$V = Vc + Va \qquad (1)$$

When respective of td of the high frequency transformer 7, 11, the full bridge converter 6, the full bridge converter 8, and the half bridge converter 12 are set so that Vc becomes 175 V and the Vb becomes 175 V, the voltage Va of the capacitor 16 becomes variable in the range from -175 V to 175 V. At that time, the output voltage V of the DC power source 2 can be controlled variably in the range of 0 V to 350 V. The current, or the voltage of the electric power storage means 3 can be controlled by detecting the current flown to the electric power storage means 3, or the voltage applied to the electric power storage means 3 using the output current detecting means 17, or the output voltage detecting means 18 indicated in FIG. 27, and controlling the gate signal of the half bridge converter 14 by the gate control circuit 143. The full bridge converter 6, the high frequency transformer 7, and the full bridge converter 8, and the high frequency transformer 11, the half bridge converter 12, and the half bridge converter 14 are operable bidirectionally. Therefore, the DC current can be input ,or output to the electric power storage means 3 with the output voltage in the range of from 0 V to 350 V.

An operation for charging the electric power storage means 3, which is secondary batteries connected in multi-series, by the DC power source 2 is explained hereinafter.

When the electric power storage means 3 is assumed to be expressed by an internal electromotive voltage Eb and an internal resistance Rb, a relationship between the charging current Ic and the output voltage V of the DC power source 2 can be expressed by the following equation:

$$V = Eb + Rb \cdot Ic \qquad (2)$$

Accordingly, when Eb = 100 V, Rb = 0.2 $\Omega$, and the charging current Ic = 10 A, V becomes 102 V (V = 102 V). When Vc = 175 V constant, the above condition can be satisfied by controlling the Va to be Va = -73 V. In the above case, the full bridge converter 6, the high frequency transformer 7, and the full bridge converter 8 can be operated in the mode to supply electric power to the electric power storage means 3. On the contrary, the full bridge converter 6, the high frequency transformer 11, the half bridge converter 12, and the half bridge converter 14 are in the mode to regenerate the DC power. Practically, the duty of the half bridge converter 14 is controlled by the gate control circuit 143 so that the charging current Ic coincides with 10 A, although the relationship is shifted from the value expressed by the equation (2) on account of influences of resistance and inductance component of the wiring, and others. The similar relationship is established when controlling the terminal voltage of the electric power storage means 3 so as to be a designated value.

Next, an operation for discharging from the electric power storage means 3, which is secondary batteries connected in multi-series, by the DC power source 2 is explained hereinafter.

When Eb = 100 V, Rb = 0.2 $\Omega$, and the discharging current Ic = 10 A, the output voltage V which satisfying the relationship expressed by the equation (2) becomes 98 V. When Vc = 175 V constant, the above condition can be satisfied by controlling the Va to be Va = -77 V. In the above case, the full bridge converter 6, the high frequency transformer 7, and the full bridge converter 8 can be operated in the mode to regenerate electric power from the electric power storage means 3. On the contrary, the full bridge converter 6, the high frequency transformer 11, the half bridge converter 12, and the half bridge converter 14 are in the mode to supply the DC power to the electric power storage means 3.

Hitherto, the case when the power MOSFET is used as the switching element is explained. However, the system can be composed similarly using the IGBT.

In accordance with the present embodiment as explained above in detail, the output voltage can be controlled in a wide range and precisely by connecting insulated power source, which is operable bidirectionally, in series, fixing the output of the one insulated power source at a definite value, and making the other insulated power source controllable to output positive/negative values. Because the respective insulated power source is composed to be operable bidirectionally, the system of the present invention is responsible to both a case when DC power is supplied to the electric power storage means, and a case when DC power is regenerated from the electric power storage means.

## Claims

1. A charge and discharge apparatus of electric power storage means comprising:

   an AC power source (1),
   a transforming apparatus (2), which comprises a primary winding connected to said AC power source (1), and plural secondary windings (201, 202, 203), and
   plural electric power converters comprising plural AC sides to be connected to said plural secondary windings (201, 202, 203), and plural DC sides to be connected to plural electric power storage means (4, 5, 6).

2. A charge and discharge apparatus of electric power storage means as claimed in claim 1, wherein

   said AC supply (1) comprises an electric power converting portion (104) to be connected to said primary winding.

3. A charge and discharge apparatus of electric power storage means as claimed in claim 2, wherein

   said electric power converting portion (104) is controlled so that the current flown to said primary winding becomes a current reference.

4. A charge and discharge apparatus of electric power storage means as claimed in any of claims 2 and 3, wherein

said transforming apparatus (2) is composed by connecting primary windings of plural transformers in series.

5. A charge and discharge apparatus of electric power storage means as claimed in any of claims 1 and 2, wherein

said plural electric power converters convert AC power, which is output from said plural secondary windings (201, 202, 203) to DC power, and said plural electric power storage means (4, 5, 6) are charged with said DC power.

6. A charge and discharge apparatus of electric power storage means as claimed in any of claims 1 and 2, wherein

DC power discharged from said plural electric power storage means (4, 5, 6) is converted to AC power by said plural electric power converters, and said AC power is regenerated into said AC power source (1).

7. A charge and discharge apparatus of electric power storage means as claimed in claim 1, wherein

respective of said plural electric power storage means (4, 5, 6) is any of a secondary battery, a set of batteries composed of plural unit secondary batteries connected each other in series, an electrical double layer capacitor, a capacitor, and a fuel cell.

8. A charge and discharge apparatus of electric power storage means as claimed in any of claims 1 and 2, wherein

said transforming apparatus (2) comprises plural transformers, said primary winding is composed by connecting primary side windings of said plural transformers in parallel, and said secondary winding (201, 202, 203) is composed of plural secondary windings of said plural transformers.

9. A charge and discharge apparatus of electric power storage means as claimed in claim 8, wherein

said plural electric power converters comprises:

plural electric power converting circuits (311, 321, 331) including said plural AC sides, and plural chopper circuits including said plural DC sides.

10. A charge and discharge apparatus of electric power storage means as claimed in claim 9, wherein

at least one of said plural electric power converting circuits (311, 321, 331) is connected to at least two of said plural chopper circuits.

11. A charge and discharge apparatus of electric power storage means comprising:

an AC power source (1),
a transforming apparatus (2), which comprises a primary winding connected to said AC power source (1), and plural secondary windings (201, 202, 203);
plural electric power converters comprising plural AC sides to be connected to said plural secondary windings (201, 202, 203), and plural DC sides, and
terminals to be connected to the electric power storage means, whereto both ends of the series connection of said plural DC sides are connected.

12. A charge and discharge apparatus of electric power storage means as claimed in claim 11, wherein

an output voltage of at least one of said plural electric power converters is constant, and
an output voltage of at least other one of said plural electric power converters (311, 221, 331) is variable.

13. A motor driving system, which comprises:

a motor,
an inverter for driving said motor,
an AC power source (1) comprising an electric power converting portion for supplying electric power to said inverter,
a transforming apparatus (2) comprising a primary winding to be connected to said AC power source, and plural secondary windings (201, 202, 203),
plural electric power converters, respective AC side of which is connected to one of said plural secondary windings (201, 202, 203), and, plural electric power storage means (4, 5, 6), respective of which is connected to one of DC sides of said plural electric power converters.

14. An electric power storage system, which comprises:

an AC power source (1) connected to an AC power system,
a transforming apparatus (2) comprising a primary winding connected to said AC power source (1), and plural secondary windings (201, 202, 203),
plural electric power converters, respective AC side of which is connected to one of said plural secondary windings (201, 202, 203), and
plural electric power storage means (4, 5, 6), respective of which is connected to one of DC sides of said plural electric power converters.

**15.** A method of manufacturing electric power storage means comprising:

a first step for assembling main bodies of plural electric power storage means (4, 5, 6),
a second step for connecting one of said assembled plural electric power storage means (4, 5, 6) to respective AC side of plural electric power converters in a charge and discharge apparatus, which comprises an AC power source (1), a transforming apparatus (2) comprising a primary winding connected to said AC power source (1), and plural secondary windings (201, 202, 203), and plural electric power converters,
respective AC side of which is connected to one of said plural secondary windings (201, 202, 203) and respective DC side of which is connected to one of said plural electric power storage means (4, 5, 6) and
a third step for performing initial charging, or initial discharging, or an aging treatment on said plural electric power storage means (4, 5, 6) by said charge and discharge apparatus.

# FIG.1

## FIG. 2

## FIG. 3

# FIG. 4

(a) CARRIER WAVE SIGNAL

TIME

(b) DETECTION TIMING

(c) AC VOLTAGE

(d) AC CURRENT AT PRIMARY SIDE

(e) CHARGING CURRENT

(f) DETECTED VALUE OF CURRENT

TIME

# FIG. 5

(a) [ Ic   0 ———————————————————— TIME

(b) [ I1   0 ————————————————————

Y11 ON / OFF ————————————————————

Y12 ON / OFF ————————————————————

SEPARATING NO. 1 BATTERY

(c) [ I2   0 ————————————————————

Y21 OFF ————————————————————

Y22 ON ————————————————————

(d) [ In   0 ————————————————————

Yn1 OFF ————————————————————

Yn2 ON ———————————————————— TIME

# FIG.6

# FIG. 7

(a)

CARRIER WAVE SIGNAL

TIME

Δt

(b) GATE SIGNAL AT Qn SIDE

gn1 ON OFF
gn2 ON OFF
gn3 ON OFF
gn4 ON OFF

CARRIER WAVE SIGNAL

TIME

(c) VOLTAGE INCREASING CHOPPER CONTROL OUTPUT

(d) GATE SIGNAL AT Qc SIDE

s3 ON OFF
s4 ON OFF

TIME

# FIG.8

INTEGRATED CHARGING AND DISCHARGING CONTROL

CHARGING AND DISCHARGING CURRENT REFERENCE

INDIIDVDUAL CHARGING AND DISCHARGING CONTROL

INDIVIDUAL CONTROL REFERENCE

# FIG. 9

INDIVIDUAL
CURRENT
REFERENCE

INTEGRATED
CHARGING CONTROL

INTEGRATED
CURRENT
REFERENCE

## FIG. 10

(a) CURRENT/VOLTAGE OF RESPECTIVE BATTERY

CHARGING CURRENT — SMALL CAPACITY — LARGE CAPACITY — TIME

BATTERY VOLTAGE — SMALL CAPACITY — LARGE CAPACITY — TIME

(b) INTEGRATED CURPORATED CURRENT REFERENCE (Ic) — TIME

(c) INDIVIDUAL CURRENT COMPENSATION (Id1, Idn) — SMALL CAPACITY — LARGE CAPACITY — TIME

# FIG. 11

# FIG.12

EP 1 020 973 A2

# FIG.13

CARRIER WAVE SIGNAL

(a) OUTPUT VOLTAGE REFERENCE

(b) GATE SIGNAL AT Qc SIDE — s1, s3, s2, s4 (ON/OFF)

(c) INTEGRATED OUTPUT VOLTAGE — Vdc, 0, -Vdc

GATE SIGNAL AT Mn SIDE

(d) INDIVIDUAL CONTROL VALUE, mn1 SIGNAL (ON/OFF)

(e) INDIVIDUAL OUTPUT VOLTAGE — Vdc, 0, -Vdc

(f) INDIVIDUAL CHARGING CURRENT — 0

# FIG.14

(a)

GATE SIGNAL
AT Qn SIDE

(b)
gn1, gn4
ON
OFF
gn2, gn3
ON
OFF

(1～n COMMON)

GATE SIGNAL
AT Mn SIDE

(c)
INDIVIDUAL
CONTROL
VALUE
mn2
ON
SIGNAL OFF

(m11, ⋯, mn1 IS OFF)

$\Delta t1$

$\Delta t2$

# FIG.15

INTEGRATED CHARGING AND
DISCHARGING CONTROL

CHARGING AND
DISCHARGING
CURRENT
REFERENCE

# FIG.16

INTEGRATED CHARGING AND DISCHARGING CONTROL

OUTPUT VOLTAGE REFERENCE

# FIG.17

# FIG.18

CURRENT/VOLTAGE
CONTROL

## FIG.19

# FIG.20

# FIG.21

# FIG.22

# FIG.23

# FIG.24

# FIG.25

# FIG.26

# FIG.27

# FIG.28